# EUROPEAN PATENT APPLICATION

(11) **EP 4 670 891 A1**
(43) Date of publication of application: **31.12.2025**
(21) Application number: 25178058.1
(22) Date of filing: 21.05.2025
(51) Int. Cl.: B23K 9/095

(54) **WELDING SYSTEMS AND METHODS FOR GENERATING AND IMPLEMENTING WELDING OPERATION ESTIMATIONS**

(30) Priority: 31.05.2024 US 202463654534 P; 23.04.2025 US 202519187528
(71) Applicant: Illinois Tool Works Inc., Glenview IL 60025 (US)
(72) Inventor: SHELLABARGER, Dave, Glenview, 60025 (US); FROLAND, Benjamin, Glenview, 60025 (US)
(74) Representative: HGF

(57) **Abstract**

A welding operation estimation system comprises: one or more input devices configured to receive one or more input values, wherein each of the input values is associated with an operation characteristic of a welding operation to be performed; one or more indication devices configured to indicate one or more welding operation estimations; and control circuitry configured to: determine, based on one or more of the input values, a total welding operation energy of the welding operation; estimate, based on one or more of the input values and the total welding operation energy, one or more welding operation estimations; and control the one or more indication devices to display one or more indications of the one or more welding operation estimations.

## Description

### RELATED APPLICATIONS

The present application claims the benefit of U.S. Provisional Patent Application Serial No. 63/654,534, filed May 31, 2024, entitled "WELDING SYSTEMS AND METHODS FOR GENERATING AND IMPLEMENTING WELDING OPERATION ESTIMATIONS." The entirety of U.S. Provisional Patent Application Serial No. 63/654,534 is expressly incorporated herein by reference.

### FIELD OF THE DISCLOSURE

This disclosure relates generally to conducting welding operations and, more particularly, to systems and methods for generating and implementing estimations made for a welding operations.

### BACKGROUND

Welding operations generally require the usage of both one or more energy supplies (e.g., wall power, batter power, generator power, etc.) and quantities of consumables materials (e.g., welding wire, shielding gas). Determining required amounts and combinations of energy supplies and consumables can be difficult, and incorrect estimations can render conducting a welding operation impossible or introduce inefficiencies in areas such as resource allocation and welding operator time.

### SUMMARY

Welding systems, welding operation estimation systems, and methods for generating and implementing welding operation estimations are disclosed, substantially as illustrated by and described in connection with at least one of the figures, as set forth more completely in the claims.

### BRIEF DESCRIPTION OF THE DRAWINGS

FIG. 1 is a block diagram of a first example welding-type system, in accordance with aspects of this disclosure;
FIG. 2 is a block diagram of a second example welding-type system, in accordance with aspects of this disclosure;
FIG. 3 illustrates a block diagram of example control circuitry for operating the systems of FIGS. 1 and/or 2, in accordance with aspects of this disclosure;
FIG. 4 illustrates an example user interface for receiving inputs for welding operation estimation, in accordance with aspects of this disclosure;
FIG. 5 illustrates an example user interface for the display and/or selection of indications of welding operation estimations, in accordance with aspects of this disclosure; and
FIG. 6 illustrates a flowchart representative of example machine readable instructions which may be executed by the example control circuitry of FIG. 3 to control the systems of FIGS. 1 and/or 2.

The figures are not necessarily to scale. Where appropriate, similar or identical reference numbers are used to refer to similar or identical components.

### DETAILED DESCRIPTION

With a vast array of applications and variables, a welding operator can encounter difficulty determining and comparing means and methods for approaching a project or scenario. Some conventional welding systems provide welding operators with little or no information or specifications which may be used to conduct a welding operation based on the specific project or scenario of the welding operation. While some conventional welding systems provide operator guidance as to weld parameters when given characteristics of the workpiece, conventional welding systems that provide such guidance still do not consider additional variables associated with specific welding projects or scenarios. As a result, some recommendations are based upon generalities that are not necessarily applicable to a given project or scenario, posing a potential risk to welding operators who utilize such recommendations.

Disclosed example welding systems, welding operation estimation systems, and methods involve generating and implementing welding operation estimations.

Welding operation estimations may be generated using one or more input values associated with one or more operation characteristics of a welding operation to be performed. In some examples, input values used to estimate a welding operation estimation include any, some, or all of information relating to physical characteristics of the welding operation (e.g., a welding process type, a welding technique, a machine type, a workpiece material, a workpiece thickness, a joint length, a joint position, a joint type, etc.). In some examples, input values used to estimate a welding operation estimation include any, some, or all of information relating to available energy sources for the welding operation (e.g., one or more batteries and/or one or more AC input power sources). In some such examples, input values used to estimate a welding operation estimation include any, some, or all of information relating to characteristics of the available energy sources (e.g., one or more energy storage capacities of one or more batteries and/or one or more AC power types of one or more AC input power sources, one or more input voltages of one or more AC input power sources, and/or one or more current limits of one or more AC input power sources). In some examples, input values used to estimate a welding operation estimation include any, some, or all of information relating to available consumable materials for a welding operation (e.g., one or more available electrodes, one or more available filler materials, and/or one or more available shielding gasses). In some such examples, input values used to estimate a welding operation estimation further include any, some, or all of information relating to characteristics of the available consumable materials (e.g., one or more types of one or more available electrodes and/or one or more available filler materials, one or more materials of one or more available electrodes, one or more sizes of one or more available electrodes and/or one or more available filler materials, one or more lengths, weights, and/or quantities of one or more available electrodes and/or one or more available filler materials, one or more types of one or more available shield gasses, and/or one or more quantities of one or more available shield gasses).

Using one or more input values associated with one or more welding operation characteristics (e.g., physical characteristics, available energy sources, characteristics of available energy sources, available consumable materials, characteristics of available consumable materials, etc.), disclosed examples may generate welding operation estimations. Accordingly, such welding operation estimations are generated based on a holistic dataset of, e.g., aspects of the welding operation and of the available supplies and tools for the welding operation. In examples, a welding operation estimation may include any, some, or all of one or more energy supply strategies, one or more consumable specifications, one or more welding process characteristics, and/or one or more recommended values for welding parameters). Accordingly, disclosed example welding systems, welding operation estimation systems, and methods provide both a broader array of estimations and more accurate estimations than conventional systems. These welding operation estimations may be provided to a welding operator for reference prior to a welding operation. Further, such welding operation estimations may be used to, e.g., plan and allocate resources for one or more future welding operations, operate a welding system according to one or more of the welding operation estimations, and/or indicate when a welding operation may not be possible.

In examples, generated welding operation estimations can include one or more energy supply strategies for a welding operation to be performed. An energy supply strategy generated for a welding operation may include any, some, or all of a quantity of batteries, one or more AC input power source types (e.g., power mains, engine-driven generators, generator-powered inverters, battery-powered inverters, etc.), a combination of a quantity of batteries and one or more AC input power types, and/or an indication that success of the welding operation is estimated to be impossible or insufficiently probable with the currently-available energy source(s).

In examples, generated welding operation estimations can include one or more consumable specifications of one or more consumables for use in a welding operation to be performed. As used herein, the term "consumable" refers to a consumable material and/or substance used or to be used in a welding operation. For example, a consumable may be an electrode (e.g., weldingwire, stick electrodes, etc.), a filler material (e.g., filler metal, filler rods, etc.), a shielding gas (e.g., carbon dioxide, argon, helium, oxygen, etc.), etc. In various examples, a "quantity" of a consumable may thereby be, e.g., a length of welding wire, a number of stick electrodes, a weight of filler metal, a quantity of canisters of argon, etc. A consumable specification of a generated welding operation estimation may include an indication of one or more types of one or more consumables, one or more quantities of each of the one or more types of the one or more consumables, and/or an indication that success of the welding operation is estimated to be impossible or insufficiently probable with the currently-available consumable(s).

In examples, generated welding operation estimations can include one or more welding process characteristics for a welding operation to be performed. A welding process characteristic may include any, some, or all of a welding process type (e.g., metal inert gas welding ("MIG")/gas metal arc welding ("GMAW"), tungsten inert gas welding ("TIG")/gas tungsten arc welding ("GTAW"), flux cored arc welding ("FCAW"), plasma cutting, etc.), a welding technique (e.g., seam welding, stitch welding, spot welding, etc.) a type of filler material (e.g., an aluminum alloy, a bronze alloy, a copper alloy, etc.), a size of filler metal, a type of shielding gas, a welding equipment characteristic (e.g., a specific piece of welding equipment, a performance specification for a type of welding equipment, a welding equipment setting, etc.), and/or a welding travel speed.

In examples, generated welding operation estimations can include one or more recommended values for welding parameters of a welding operation to be performed. A welding parameter of a welding operation may include any, some, or all of a voltage parameter (e.g., a voltage setpoint, a peak pulse voltage, a background pulse voltage, a voltage ramp rate, etc.), a current parameter (e.g., a current setpoint, a peak pulse current, a background pulse current, a short circuit-clearing current, a current ramp rate, etc.), an inductance parameter (e.g., a target inductance, a range of inductances, etc.), a wire feeder parameter (e.g., an operation wire feed speed, a run-in wire feed speed, a hot start wire feed speed, a wire feed speed ramp rate, etc.), and/or a wave quality of an electrical current used in the welding operation (e.g., an AC frequency, an AC balance, an AC wave shape, etc.).

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As utilized herein the terms "circuits," "circuitry," "controller," and "control circuitry" refer to physical electronic components (i.e. hardware) and any software and/or firmware ("code") which may configure the hardware, be executed by the hardware, and or otherwise be associated with the hardware. As used herein, for example, a "circuit" may comprise any analog and/or digital components, power and/or control elements (such as a microprocessor, digital signal processor (DSP), software, and the like), discrete and/or integrated components, associated software, hardware, and/or firmware, and/or portions and/or combinations thereof. As used herein, for example, a particular processor and memory storage device may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory storage device.

As used, herein, the term "memory," "memory storage device," and/or "memory device" means computer hardware or circuitry to store information for use by a processor and/or other digital device. The memory, memory storage device, and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory, memory storage device, and/or memory device can be configured to store code, instructions, applications, software, firmware and/or data, and may be external, internal, or both with respect to a processor.

As used herein, the term "energy storage device" is any device that stores energy, such as, for example, a battery, a super capacitor, etc.

As used herein, the term "memory" includes volatile and non-volatile memory, and can be arrays, databases, lists, etc.

As used herein, the term "torch" or "welding-type tool" can include a hand-held or robotic welding torch, gun, or other device used to create the welding arc.

As used herein, the term "welding mode" or "welding operation" is the type of process or output used, such as CC, CV, pulse, MIG, TIG, spray, short circuit, etc.

As used herein, the term "boost converter" is a converter used in a circuit that boosts a voltage. For example, a boost converter can be a type of step-up converter, such as a DC-to-DC power converter that steps up voltage while stepping down current from its input (e.g., from the energy storage device) to its output (e.g., a load and/or attached power bus). It is a type of switched mode power supply.

As used herein, the term "buck converter" (e.g., a step-down converter) refers to a power converter which steps down voltage (e.g., while stepping up current) from its input to its output.

Features described herein make reference to the accompanying drawings in which exemplary embodiments of the disclosure are shown. Whenever appropriate, the same reference numerals are used throughout the drawings to refer to the same or like parts. However, it should be understood that the systems of this disclosure can be embodied in many different forms and should not be construed as limited to the embodiments set forth herein.

The term "power" is used throughout this specification, for convenience, to describe hydraulic, mechanical, and electrical power. However, the term "power," as used herein, also includes related measures such as energy, current, voltage, resistance, conductance, and enthalpy. For example, controlling "power" may involve controlling voltage, current, energy, resistance, conductance, and/or enthalpy, and/or controlling based on "power" may involve controlling based on voltage, current, energy, resistance, conductance, and/or enthalpy.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

As used herein, the word "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. While various features, elements or steps of particular embodiments can be disclosed using the transitional phrase "comprising," it is to be understood that alternative embodiments, including those that can be described using the transitional phrases "consisting" or "consisting essentially of," are implied. Thus, for example, implied alternative embodiments to an apparatus that comprises A+B+C include embodiments where an apparatus consists of A+B+C and embodiments where an apparatus consists essentially of A+B+C.

Disclosed welding operation estimation systems comprise: one or more input devices configured to receive one or more input values, wherein each of the input values is associated with an operation characteristic of a welding operation to be performed; one or more indication devices configured to indicate one or more welding operation estimations; and control circuitry configured to: determine, based on one or more of the input values, a total welding operation energy of the welding operation; generate, based on one or more of the input values and the total welding operation energy, one or more welding operation estimations; and control the one or more indication devices to display one or more indications of the one or more welding operation estimations.

In some example welding operation estimation systems, the welding operation system further comprises communication circuitry, wherein the control circuitry is further configured to use the communication circuitry to transmit a control signal to a welding-type power system to control the welding-type power system to operate according to at least one of the welding operation estimations.

In some example welding operation estimation systems, the control circuitry is further configured to determine, based on one or more of the input values, one or more recommended values for welding parameters for the welding operation; and the estimating of the one or more welding operation estimations is based on one or more of the recommended values for the welding parameters. In some such example welding operation estimation systems, the welding operation estimation system further comprises communication circuitry, wherein the control circuitry is further configured to use the communication circuitry to transmit a control signal to a welding-type power system to control the welding-type power system to operate according to the one or more recommended values for the welding parameters.

In some example welding operation estimation systems, the control circuitry is further configured to determine, based on one or more of the input values, one or more recommended values for welding parameters for the welding operation; the estimating of the one or more welding operation estimations is based on one or more of the recommended values for the welding parameters; and the determining of the total welding operation energy is based on the one or more recommended values for the welding parameters.

In some example welding operation estimation systems, the control circuitry is further configured to determine, based on one or more of the input values, a consumable specification comprising a quantity of a consumable of the welding operation; and the estimating of the one or more welding operation estimations is further based on the welding operation consumable quantity. In some example welding operation estimation systems, the control circuitry is configured to determine the total welding operation energy as a total number of watt-hours or a number of minutes of welding.

In some example welding operation estimation systems, the control circuitry is further configured to determine, based on one or more of the input values, one or more recommended welding process characteristics for the welding operation. In some such example welding operation estimation systems, the control circuitry is configured to determine the total welding operation energy based on the one or more recommended welding process characteristics.

In some example welding operation estimation systems, the operation characteristics comprise at least one physical characteristic of the welding operation, at least one consumable characteristic of one or more available consumables, and at least one energy characteristic of one or more available energy sources.

In some example welding operation estimation systems, each of the one or more welding operation estimations comprises an energy supply strategy. In some such examples, at least one of the energy supply strategies is an energy storage device supply strategy comprising a quantity of energy storage devices having a specified capacity. In some such example welding operation estimation systems, the quantity of energy storage devices is generated based on a power source input of the one or more input values, the power source input comprising of an indication of an availability of AC input power and a type of the AC input power source. In some such example welding operation estimation systems, the type of the AC input power source comprises at least one of an AC input voltage, an AC input power source type, or an AC input current limit.

In some example welding operation estimation systems, each of the one or more welding operation estimations comprises an energy supply strategy and at least one of the energy supply strategies is a combined source energy supply strategy comprising an energy source combination of a quantity of energy storage devices and an AC input power source. In some such example welding operation estimation systems, the energy source combination is generated based on a power source input of the one or more input values, the power source input comprising an indication of an availability of the AC input power source and a type of the AC input power source.

In some example welding operation estimation systems, each of the one or more welding operation estimations comprises an energy supply strategy, wherein at least one of the energy supply strategies comprises a plurality of energy source combinations of quantities of energy storage devices and AC input power sources.

In some example welding operation estimation systems, the welding operation estimation system further comprises communication circuitry, wherein each of the one or more welding operation estimations comprises an energy supply strategy and wherein the control circuitry is further configured to use the communication circuitry to transmit a control signal to a welding-type power system to control the welding-type power system to operate according to at least one of the energy supply strategies.

In some example welding operation estimation systems, the welding operation estimation system further comprises one or more feedback input devices configured to receive one or more feedback input values, wherein: each of the feedback input values is associated with a completed welding operation characteristic of a completed welding operation; and the control circuitry is further configured to: compare the one or more feedback input values to a selected welding operation estimation of the one or more welding operation estimations; determine, based on the comparing of the one or more feedback input values to the selected welding operation, one or more estimation process modifications; and generate one or more subsequent welding operation estimations based on one or more subsequent input values, a subsequent welding operation energy, and one or more of the estimation process modifications.

Disclosed example welding systems comprise: power conversion circuitry configured to convert input power to welding-type power; one or more input devices configured to receive one or more input values, wherein each of the input values is associated with an operation characteristic of a welding operation to be performed; one or more indication devices configured to indicate one or more welding operation estimations; and control circuitry configured to: determine, based on one or more of the input values, a total welding operation energy of the welding operation; generate, based on one or more of the input values and the total welding operation energy, one or more welding operation estimations; and control the one or more indication devices to display one or more indications for the one or more welding operation estimations.

In some example welding systems, the welding operation system further comprises communication circuitry, wherein the control circuitry is further configured to use the communication circuitry to transmit a control signal to a welding-type power system to control the welding-type power system to operate according to at least one of the welding operation estimations.

In some example welding systems, the control circuitry is further configured to determine, based on one or more of the input values, one or more recommended values for welding parameters for the welding operation; and the estimating of the one or more welding operation estimations is based on one or more of the recommended values for the welding parameters. In some such example welding systems, the welding system further comprises communication circuitry, wherein the control circuitry is further configured to use the communication circuitry to transmit a control signal to a welding-type power system to control the welding-type power system to operate according to the one or more recommended values for the welding parameters.

In some example welding systems, the control circuitry is further configured to determine, based on one or more of the input values, one or more recommended values for welding parameters for the welding operation; the estimating of the one or more welding operation estimations is based on one or more of the recommended values for the welding parameters; and the determining of the total welding operation energy is based on the one or more recommended values for the welding parameters.

In some example welding systems, the control circuitry is further configured to determine, based on one or more of the input values, a consumable specification comprising a quantity of a consumable of the welding operation; and the estimating of the one or more welding operation estimations is further based on the welding operation consumable quantity. In some example welding systems, the control circuitry is configured to determine the total welding operation energy as a total number of watt-hours or a number of minutes of welding.

In some example welding systems, the control circuitry is further configured to determine, based on one or more of the input values, one or more recommended welding process characteristics for the welding operation. In some such example welding systems, the control circuitry is configured to determine the total welding operation energy based on the one or more recommended welding process characteristics.

In some example welding systems, the operation characteristics comprise at least one physical characteristic of the welding operation, at least one consumable characteristic of one or more available consumables, and at least one energy characteristic of one or more available energy sources.

In some example welding systems, each of the one or more welding operation estimations comprises an energy supply strategy. In some such examples, at least one of the energy supply strategies is an energy storage device supply strategy comprising a quantity of energy storage devices having a specified capacity. In some such example welding systems, the quantity of energy storage devices is generated based on a power source input of the one or more input values, the power source input comprising of an indication of an availability of AC input power and a type of the AC input power source. In some such example welding systems, the type of the AC input power source comprises at least one of an AC input voltage, an AC input power source type, or an AC input current limit.

In some example welding systems, each of the one or more welding operation estimations comprises an energy supply strategy and at least one of the energy supply strategies is a combined source energy supply strategy comprising an energy source combination of a quantity of energy storage devices and an AC input power source. In some such example welding systems, the energy source combination is generated based on a power source input of the one or more input values, the power source input comprising an indication of an availability of the AC input power source and a type of the AC input power source.

In some example welding systems, each of the one or more welding operation estimations comprises an energy supply strategy, wherein at least one of the energy supply strategies comprises a plurality of energy source combinations of quantities of energy storage devices and AC input power sources.

In some example welding systems, the welding system further comprises communication circuitry, wherein each of the one or more welding operation estimations comprises an energy supply strategy and wherein the control circuitry is further configured to use the communication circuitry to transmit a control signal to a welding-type power system to control the welding-type power system to operate according to at least one of the energy supply strategies.

In some example welding systems, the welding system further comprises one or more feedback input devices configured to receive one or more feedback input values, wherein: each of the feedback input values is associated with a completed welding operation characteristic of a completed welding operation; and the control circuitry is further configured to: compare the one or more feedback input values to a selected welding operation estimation of the one or more welding operation estimations; determine, based on the comparing of the one or more feedback input values to the selected welding operation, one or more estimation process modifications; and generate one or more subsequent welding operation estimations based on one or more subsequent input values, a subsequent welding operation energy, and one or more of the estimation process modifications.

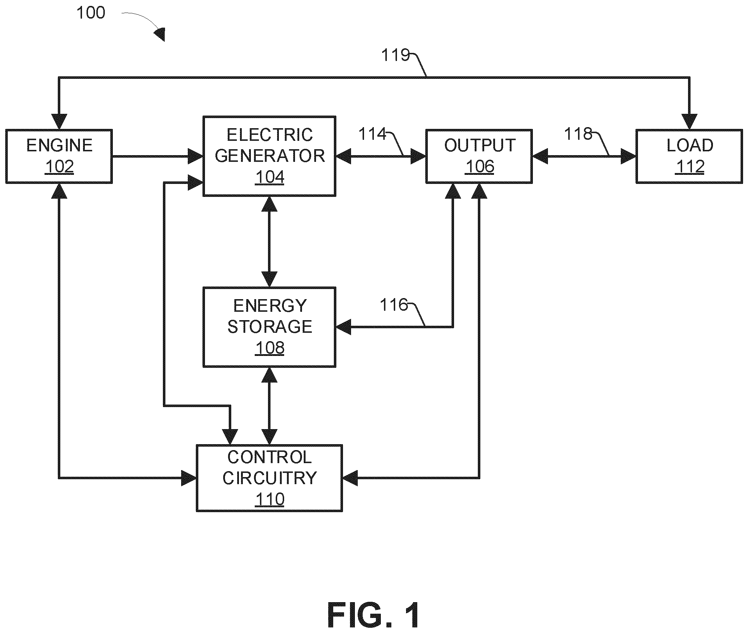

FIG. 1 is a block diagram of an example of a first welding-type power system 100 which may be used to conduct a welding operation. The first welding-type power system 100 includes an engine 102 connected to an electric generator 104 to feed an output 106 (e.g., a power receptacle, a coupler, a power cable, etc.). An energy storage device 108 (e.g., one or more battery packs) can also be connected to the output 106, which can provide power to a load 112 (e.g., one or more welding-type torches, one or more rechargeable batteries, one or more power cords, one or more lights, and/or one or more other tools and/or components powered by the first welding-type power system 100). In an example, the output 106 is configured for a particular type of connection (e.g., a welding-type torch cable), while in other examples the output 106 can be modified to accept multiple types of connectors. In the example of FIG. 1, the output 106 may be configured with multiple connection outputs, and/or one or more adapters to accommodate various magnitudes and/or quantities of the load 112 (e.g., a welding-type torch, a rechargeable battery, and a light used in a welding operation).

Control circuitry 110 is connected to any, some, or all of the engine 102, the electric generator 104, the output 106, and/or the energy storage device 108. The control circuitry 110 is configured to determine a proportional contribution from each of the engine 102 and/or the energy storage device 108, and command an output accordingly. For instance, the engine 102, via the electric generator 104, can generate a first power output 114 and provide the first power output 114 to the output 106, whereas the energy storage device 108 can generate a second power output 116 and provide the second power output 116 to the output 106. The power outputs 114, 116 are combined into a total power output 118 to power the load 112.

The proportion of each output, from the engine 102 and energy storage device 108, can be determined by an operator (e.g., via a user interface), by trend analysis, by a determined mode of operation, etc. The control circuitry 110 can automatically command the engine 102 and/or the energy storage device 108 to output power based on the power demand (e.g., the total power output 118) and the determined proportional output of each power source. In an example, a change in power demand, such as by connecting or activating a device (e.g., the load 112) at the output 106, generates an automatic response by the control circuitry 110 to activate the engine 102 (e.g. to turn on, increase speed, etc.) and/or draw power from the energy storage device 108.

The first welding-type power system 100 can provide power to various different magnitudes and/or quantities of the load 112, such as welding-type power to a welding-type torch (e.g., a MIG/GMAW torch, a TIG/GTAW torch, a FCAW torch, a plasma cutter, etc.), power to an auxiliary device (e.g., a preheating device, a wire feeder, a grinder, lighting, etc.), as well as provide battery level power to charge a battery. The various loads may be identified by a feedback signal associated with the output 106, for example. Thus, the feedback signal can inform the control circuitry 110 as to what load is present, identify a corresponding mode of operation, etc. For example, when the load 112 is a welding-type torch, the control circuitry 110 can determine a type of load (e.g., associated with a welding mode of operation) associated with an expected measured power draw. Additionally or alternatively, a rechargeable battery or auxiliary type tool can be connected to the output 106, such that the control circuitry 110 determines the type of load and mode of operation (e.g., a battery charging mode, a 120 V output, etc.).

In some examples, the load 112 may utilize mechanical power in addition to and/or instead of electrical power (e.g., the total power output 118). In some such examples, the engine 102 provides a mechanical power output 119 to the load 112 (via, e.g., a driveshaft and/or one or more mechanical linkages). In some examples, the engine 102 (e.g., a vehicle engine) is powered by a consumable fuel (e.g., gasoline). In some examples, the energy storage device 108 powers the engine 102.

Some engines may have specific ranges of output (e.g., associated with operating speeds, temperature profiles, etc.) where fuel efficiency is at a peak. Efficiency of the engine 102 may also be affected by a load on the engine 102 (e.g., as the amount of torque to turn attached components increases). For example, the engine 102 may be driving the electric generator 104, which may require additional torque to increase the first power output 114. Additionally or alternatively, the engine 102 may be driving an air compressor, which may increase the speed and/or torque from the engine 102 to operate the connected components.

Conventional engines have an efficiency of about 40% in the engine speed range of idle to about 1,800 rpm, for example. Thus, for every 100 units of energy input, 40 units are delivered as output. The remainder is ejected as heat from the exhaust, as mechanical sound energy, or consumed by the motor (e.g., by friction, heat through the cylinder walls or cylinder head, and work used to turn engine equipment). In some examples, more fuel is consumed with increased speed, due to the increasing mechanical and pumping losses. Such information can be added to the control circuitry 110 to determine a desired operating efficiency, determine the proportion of a power output from the engine 102 based on the desired efficiency, and command the engine 102 to operate accordingly.

In some examples, the energy storage device 108 is a rechargeable battery pack (e.g., a lithium-ion battery, a nickel-metal hydride battery, lead-acid battery, etc.). In other examples, the energy storage device 108 is a hybrid battery module, a capacitor, a supercapacitor, or any other type of suitable storage device, or a combination of a rechargeable battery pack and a hybrid battery module. In some examples, the energy storage device 108 is a plurality of energy storage devices.

In examples, the useful life of the energy storage device 108 can be a measure of performance and longevity, which can be quantified in several ways. For example, the control circuitry 110 can determine a duration of run time on a full charge, based on an estimate of the manufactured rating, as a number of discharge/charge cycles remaining until the end of useful life, and/or depth of each discharge/charge event.

The amount of energy the energy storage device 108 holds is measured in capacity. Capacity is the leading indicator that determines useful life of the energy storage device 108. The useful life of an energy storage device 108 can be described with reference to the number of remaining cycles. For example, Lithium- and nickel-based rechargeable batteries deliver between 300 and 500 full discharge/charge cycles before the capacity drops below 80 percent.

In examples, a discharge/charge cycle is the process of charging and discharging the energy storage device 108 to power a load, and recharging the energy storage device 108. A cycle refers to a sequence in which a charged battery is discharged and then recharged. One complete sequence constitutes one cycle. The process can be one indicator of the energy storage device's 108 remaining useful life and/or capacity, as the number of discharge/charge cycles affects useful life more than the mere passage of time.

Additionally, the depth of each discharge event can be a factor in determining remaining useful life of the energy storage device 108. If, for example, no more than 20 percent of the capacity is discharged at any given time, even a greater number of discharge/charging events will have a relatively limited impact on the useful life versus a smaller number of discharge/charging events that completely drain the energy storage device 108. For example, at an 80% depth of discharge, a battery may estimate about 400 cycles remaining. For a 100% depth of discharge, a battery may estimate about 320 cycles remaining.

Additionally or alternatively, the control circuitry 110 can perform an analysis based on manufacturing specifications that can affect useful life of the energy storage device 108, including the type, number and/or the quality of battery cells used.

In addition to cycling events, other factors can contribute to loss of capacity. For example, keeping a battery at an elevated temperature induces stress to the components therein. For instance, a fully charged Li-ion battery stored at a temperature of about 40°C may lose about 35 percent of its capacity in a year without ever cycling. Information about the storage of an energy storage device can also be included in a determination as to the remaining useful life of the device, and thus the proportion of the total power output 118 should be drawn from the energy storage device 108.

Thus, the control circuitry 110 is configured to monitor and control when and how the energy storage device 108 is to be used to augment the second power output 116 at the output 106. For example, the power from the energy storage device 108 can supplement the full operating power from the engine 102 to provide a greater power output than the rated engine output. In this example, high power activities, such as clearing a short or a gouging operation, can be performed by conditioning the first power output 114 via a converter.

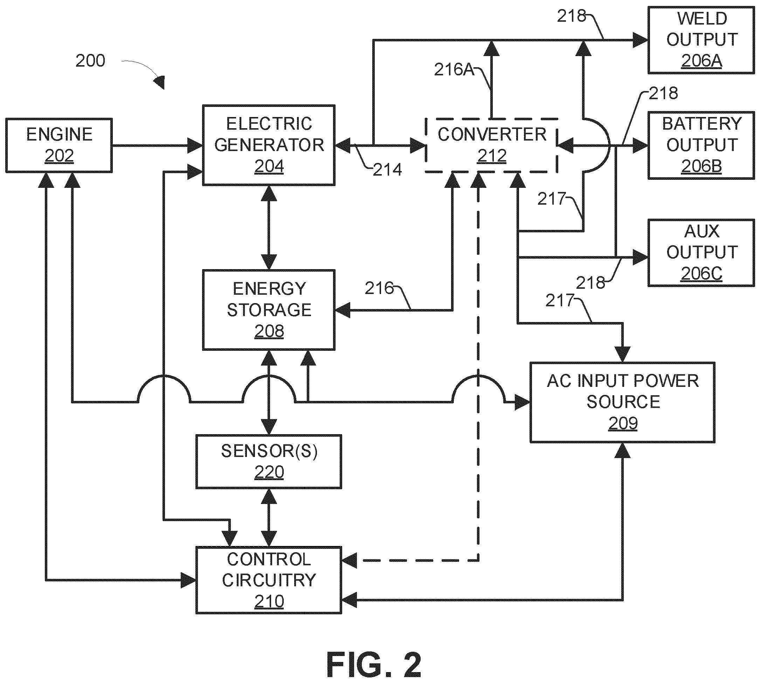

FIG. 2 is a block diagram of an example of a second welding-type power system 200. The second welding-type power system 200 can be configured to operate with one or all of the features disclosed with respect to the first welding-type power system 100, as provided herein. In examples, the second welding-type power system 200 includes an engine 202 connected to an electric generator 204 to provide a first power output 214. In examples, the second welding-type power system 200 includes an energy storage device 208 (e.g., one or more battery packs) to provide a second power output 216. In examples, the second welding-type power system 200 includes an AC input power source 209 (e.g., a power main, a generator-powered inverter, a battery-powered inverter, and/or an engine-driven generator separate of the electric generator 204) to provide a third power output 217 (e.g., an alternating current ("AC")).

In examples, any, some, or all of the first power output 214, the second power output 216, and/or the third power output 217 have a voltage sufficient to power a welding-type tool, directed to a welding output 206A, a battery charging output 206B, and/or an auxiliary power output 206C. In some examples, either or both of the power outputs 214, 217 may be provided to the energy storage device 208, e.g., to charge the energy storage device 208. In some examples, any, some, or all of the power outputs 214, 216, 217 may be provided to any, some, or all of the outputs 206A, 206B, 206C. In some examples, the second welding-type power system 200 includes a converter 212 (e.g., power conversion circuitry) to convert power, e.g., for the welding output 206A, the battery charging output 206B, the auxiliary power output 206C (e.g., to power auxiliary power components, such as a wire feeder, compressed air system, etc.), charging the energy storage device 208, and/or one or more other outputs.

In examples, the converter 212 may include transformers, rectifiers, switches, and so forth, capable of converting AC input power to AC and/or DC output power as dictated by the demands of the second welding-type power system 200 (e.g., particular welding processes and regimes). Accordingly, the converter 212 may convert any, some, or all of the power outputs 214, 216, 217 into a conditioned power output 216A. The conditioned power output 216A may be all of the total power output 218 or only some of the total power output 218. The conditioned power output 216A may additionally and/or alternatively be provided to the energy storage device 208, e.g., to charge the energy storage device 208. In some examples, the first welding-type power system 100 additionally includes the converter 212 (e.g., to convert either and/or both of the power outputs 114, 116 into the total power output 118).

The second welding-type power system 200 includes control circuitry 210 and one or more sensors 220. The sensors 220 monitor characteristics corresponding to, among other things, engine 202 operational parameters (e.g., run time, temperature, fuel consumption, etc.), parameters of the energy storage device 208 (e.g., number of discharge/charge events, depth of charge, time in operation, etc.) and one or more parameters associated with total power output 218 and power demand (e.g., a voltage, current, temperature, resistance, impedance, etc.). The information provided by the sensors 220 to the control circuitry 210 is used to determine when the engine 202 and the energy storage device 208 are to be employed to output power, for how long, at what level, etc.

The control circuitry 210 can be configured as a microcontroller, or to include one or more processors, to perform as a programmable logic circuit, a system-on-chip, a programmable logic device, and/or any other type of logic circuit. In some examples, the control circuitry 210 can include one or more memory storage devices, one or more energy storage devices, one or more sensors, one or more network interfaces, and/or one or more user interfaces.

An efficiency circuit of the control circuitry 210 can be implemented in hardware and/or software, and can be configured to receive information regarding, e.g., the total power output 218, a desired efficiency of the engine 202, and/or a remaining target life of the energy storage device 208. The information can correspond to, for example, engine operational parameters, energy storage device parameters, other sensor data, a user input, as well as data related to trend analysis, threshold values, profiles associated with a particular mode of operation, etc., can be stored in a comparison chart, list, library, etc., within a memory storage device.

In examples, the control circuitry 210 can analyze and/or store information regarding system usage trends based on the monitored signals. These stored trends can be used to predict when the control circuitry 210 should control the engine 202 to start, stop and/or adjust speed, and/or activate the energy storage device 208, in response to a change in the power demand and/or a determined mode. The usage trends can be specific to either or both of the welding-type power systems 100, 200, or be loaded onto memory of the control circuitry 210 to reflect usage trends of other systems.

Based on related information, the efficiency circuit of the control circuitry 210 determines the proportional values for the first power output 214 from the engine 202, the second power output 216 from the energy storage device 208, and the third power output 217 from the AC input power source 209. The proportional values can be added to make up the total power output 218 to any, some, or all of the outputs 206A, 206B, 206C based on a power demand signal that indicates a contribution of the first power output 214 and second power output 116. Additionally or alternatively, the controller can periodically transmit a test signal to monitor any, some, or all of the outputs 206A, 206B, 206C (e.g., to determine when a welding-type torch is present, or a rechargeable battery is fully charged).

Based on one or more measured parameters (e.g., change in voltage, change in current, change in temperature, etc.), as well as historical data, the control circuitry 210 can determine the type of power draw and/or mode of operation. For instance, if the control circuitry 210 determines a quick cut operation is being performed, the control circuitry 210 can activate the converter 212 and draw power from the energy storage device 208 to satisfy the brief increase in power demand without adjusting the speed of the engine 202. Similarly, clearing a short or a gouging operation can be performed by supplementing the power output with power from the energy storage device 208.

If, however, the control circuitry 210 determines a more significant increase in power demand (e.g., commencement of a particular welding-type operation), the control circuitry 210 can determine the speed of the engine 202 should be increased. The control circuitry 210 continues to monitor the power demand, and will adjust the speed of the engine 202 and the activation and/or deactivation of the energy storage device 108 accordingly.

If the engine 202 reaches an appropriate operating speed to satisfy the measured power demand, the control circuitry 210 will disable/turn off the converter 212 and therefore stop supplementing with power from the energy storage device 208. The energy storage device 208 can then connect to the engine 202 (e.g., via the electric generator 204 and/or the converter 212) to recharge while the engine 202 is rotating at normal operating speeds. The converter 212 can be a buck converter in some examples. In some examples, the converter 212 is a boost converter and/or a bi-directional converter.

In any event, the control circuitry 210 can selectively control the power provided to each output. Consistent with the disclosed examples, each of the outputs 206A, 206B, 206C can provide the same level of power (e.g., each operating in a welding mode or a battery recharging mode), or different levels of power. In this example, the welding output 206A can be operating in a welding mode, and the battery charging output 206B can be powering a rechargeable battery. In yet another example, the auxiliary power output 206C powers (e.g., by providing VAC power to) an auxiliary device (e.g., lights, a grinder, a battery charger, etc.) the sensors 220, the control circuitry 210, and/or one or more other devices independent of or simultaneously during a welding operation.

In some examples, the second power output 216 and/or the third power output 217 contribute to the total power output 218 to provide welding power to the welding output 206A. Thus, the converter 212 is used to condition a conditioned power output 216A, output by the converter 212, to be suitable for welding-type power. In other examples, the first power output 214, the second power output 216, and/or the third power output 217 is conditioned by the converter 212 to provide the total power output 218 to the battery charging output 206B and/or the auxiliary power output 206C. In an example, the efficiency circuit of the control circuitry 210 determines that only one of the three power sources is to be activated. In this scenario, the total power output 218 is equal to only one of the first power output 214, the second power output 216, and/or the third power output 217. In an example, the efficiency circuit of the control circuitry 210 determines that only two of the three power sources is to be activated. In this scenario, the total power output 218 equals the sum of any two of the first power output 214, the second power output 216, and/or the third power output 217. In some examples, the engine 202 additionally and/or alternatively provides a mechanical power output (e.g., similar to the mechanical power output 119) to any, some, or all of the outputs 206A, 206B, 206C.

In some examples, the AC input power source 209 is used to supplement either or both of the engine 202 and/or the energy storage device 208 in generating the total power output 218. In some examples, the AC input power source provides input power to the engine 202. In some examples, the AC input power source 209 may provide the third power output 217 (e.g., directly or as conditioned by the converter 212) to the energy storage device 208 (e.g., to charge the energy storage device 208). In some examples, the second welding-type power system 200 includes any combination of one, a plurality, or none of the engine 202, one, a plurality, or none of the electric generator 204, one, a plurality, or none of the energy storage device 208, and/or one, a plurality, or none of the AC input power source 209. In some examples, the control circuitry 210 selectively determines (based on, e.g., a control signal received by the control circuitry 210) what proportion (if any) of the total power output 218 is generated by any, some, or all of the electric generator 204, the energy storage device 208, and/or the AC input power source 209. In some examples, the first welding-type power system 100 further includes the AC input power source 209 as an additional and/or alternative power source of the total power output 118.

The second welding-type power system 200 can include a user interface (e.g., one or more computer input devices, one or more switches, one or more knobs, one or more dials, one or more smartphones, one or more monitors and/or screens, one or more touchscreens, and/or one or more other user-manipulatable devices which may generate an input signal) to provide options for an operator to, e.g., control a function of the power sources and/or outputs at the second welding-type power system 200, such as designating the proportional value of any, some, or all of the power outputs 214, 216, 217. Additionally or alternatively, the user interface can include a list of operations with either a set of known parameters, or a list of operations that correspond to a learned operation. Thus, the known or historical actions and conditions during a particular operation will aid in the determination of when to start, stop or adjust a speed of the engine 202, as well as when to draw power from the energy storage device 208 and/or the AC input power source 209 to supplement or replace the first power output 214 from the engine 202.

In some examples, the control circuitry 210 includes a network interface configured to send and/or receive information from a remote device (e.g., a remote computer, a cloud computing environment, etc.). The calculations, determinations, comparisons, analysis, stored data, etc., can be performed and/or updated via the network interface.

In some examples, one or more component may be in direct communication with another component, for example, one or more of the various system components (e.g., the control circuitry 210) can be directly linked to any one or more of the other components (e.g., the electric generator 204, the energy storage device 208, the AC input power source 209, the converter 212, the sensors 220, the etc.) to facilitate communication.

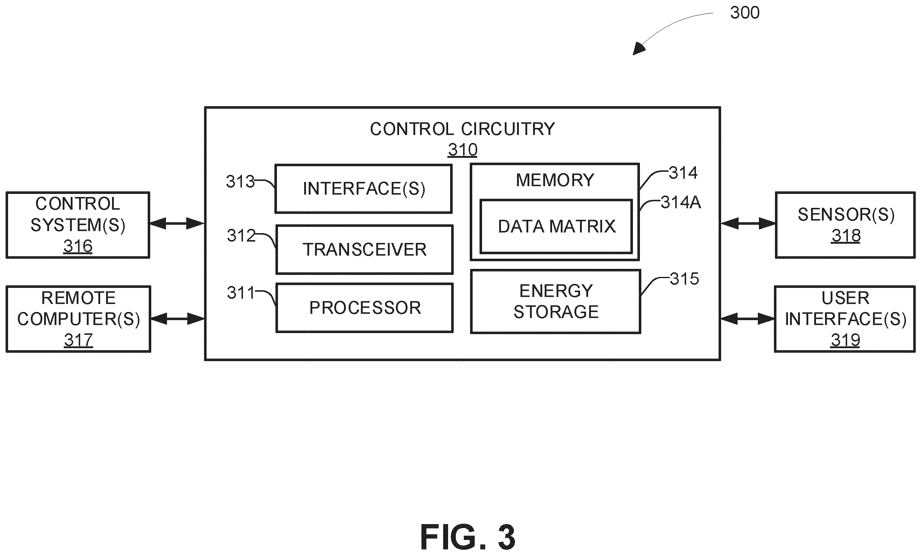

FIG. 3 is a block diagram of an example of a welding operation estimation system 300. The welding operation estimation system 300 comprises an example of a control circuitry 310, which can be configured as a microcontroller, or to include a processor 311, to perform as a programmable logic circuit, a system-on-chip, a programmable logic device, and/or any other type of logic circuit. The control circuitry 310 can be implemented, e.g., as the control circuitry 110 of the first welding-type power system 100, as the control circuitry 210 of the second welding-type power system 200, and/or as one or more other control circuitries and/or computing devices, as may be described elsewhere herein.

In some examples, the control circuitry 310 includes a memory storage device 314, and/or an energy storage device 315. For example, information used for generating welding operation estimations (e.g., operating characteristics, physical characteristics of a welding operation, characteristics of energy sources, characteristics of consumables, energy supply strategies, consumable specifications, welding process characteristics, welding parameters, etc.) can be stored in a data matrix 314A, e.g., as a chart, a library, etc., within the memory storage device 314. In some examples, the memory storage device 314 is a single memory storage device. In other examples, the memory storage device 314 is a plurality of memory storage devices.

In some examples, the control circuitry 310 receives and/or sends commands (e.g., as one or more control signals) to or from one or more control systems 316. The one or more control systems 316 may be or include, e.g., the control circuitry 110 of the first welding-type power system 100, the control circuitry 210 of the second welding-type power system 200, and/or one or more other control circuitries and/or computing devices, as may be described elsewhere herein.

In some examples, the welding operation estimation system 300 can include one or more remote computers 317 (e.g., one or more remote controls, one or more laptops, one or more smartphones, one or more additional and/or remote control circuitries, one or more remote cloud computing systems, one or more additional and/or remote processors, one or more additional and/or remote memory storage devices, etc.). The one or more remote computers 317 may be or include, e.g., the control circuitry 110 of the first welding-type power system 100, the control circuitry 210 of the second welding-type power system 200, and/or one or more other control circuitries and/or computing devices, as may be described elsewhere herein. Any data processing described herein as being conducted by the control circuitry 310 may, additionally and/or alternatively, be conducted, in whole and/or in part, by one and/or any plurality of the remote computers 317. Any data described herein as being used by the control circuitry 310 and/or stored in the memory storage device 314 may, additionally and/or alternatively, be stored, in whole and/or in part, in one and/ any plurality of the remote computers 317.

In some examples, the welding operation estimation system 300 can include one or more sensors 318. The sensors 318 may, e.g., include the sensors 220 of the second welding-type power system 200 and/or one or more other sensors, as described elsewhere herein. In examples, the sensors 318 may comprise any, some, or all of one or more pressure sensors, one or more weight sensors (e.g., a scale), one or more imaging sensors (e.g., a camera), one or more voltmeters, one or more current sensors, one or more electromagnetic field ("EMF") sensors, one or more spectrographic sensors, one or more lasers or other wave-based sensors, and/or one or more other sensors.

In examples, one or more of the sensors 318 may be included in or otherwise measure any, some, or all of the components of either or both of the welding-type power systems 100, 200. In examples, one or more of the sensors 318 may be used to measure physical characteristics of a welding operation. For example, one or more of the sensors 318 (e.g., one or more cameras) may generate one or more input signals containing image information of a workpiece to be welded in a welding operation (using, e.g., either or both of the welding-type power systems 100, 200) and transmit the input signals to the control circuitry 310, which determines, using the image information, a physical characteristic of the workpiece (e.g., a material thickness and/or a material type of the workpiece). In another example, one or more of the sensors 318 (e.g., one or more weight sensors) may generate one or more input signals based on one or more measured weights of one or more containers (e.g., positioned above the weight sensors) of a consumable (e.g., welding wire) and transmit the input signals to the control circuitry 310, which determines, using the one or more measured weights, one or more quantities of the consumable (e.g., a weight or a length of the welding wire). In another example, one or more of the sensors 318 (e.g., a voltmeter included in the AC input power source 209) may generate one or more input signals based on one or more measured voltages of the AC input power source 209 and transmit the input signals to the control circuitry 310, which determines, using the measured voltages, an AC input voltage of the AC input power source 209.

In some examples, the welding operation estimation system 300 can include one or more user interfaces 319 (e.g., one or more computer input devices, one or more switches, one or more knobs, one or more dials, one or more smartphones, one or more monitors and/or screens, one or more touchscreens, and/or one or more other user-manipulatable devices which may generate an input signal) to provide options for an operator to, e.g., input one or more input values, view and/or select one or more welding operation estimations, and/or control any, some, or all of the systems 100, 200, 300 and/or one or more components thereof. One or more of the user interfaces 319 can be configured as a display with integrated touch screen capabilities, or reflect changes made via a separate knob, remote, wireless commands, etc. In some examples, one or more of the user interfaces 319 displays sections with selectable or otherwise manipulatable fields (i.e., "input fields") such that a user may, e.g., input (e.g., by inputting a number, by selecting an item from a drop-down menu, etc.) one or more input values (e.g., indicated in the section as being associated with one or more particular operation characteristics) and/or view and/or select one or more indications of one or more welding operation estimations (e.g., generated by the welding operation estimation system 300).

In some examples, the control circuitry 310 can include a transceiver 312 to communicate with, e.g., one or more of the engine 102, the electric generator 104, the energy storage device 108, the control circuitry 110, the engine 202, the electric generator 204, the energy storage device 208, the AC input power source 209, the control circuitry 210, the converter 212, the sensors 220, the control systems 316, the remote computers 317, the sensors 318, the user interfaces 319, and/or one or more other components of any, some, or all of the systems 100, 200, 300. In some examples, the control circuitry 310 comprises and/or is connected to one or more interfaces 313, e.g., to provide a digital communications medium between the control circuitry 310 and any, some, or all the engine 102, the electric generator 104, the energy storage device 108, the control circuitry 110, the engine 202, the electric generator 204, the energy storage device 208, the AC input power source 209, the control circuitry 210, the converter 212, the sensors 220, the control systems 316, the remote computers 317, the sensors 318, the user interfaces 319, and/or one or more other components of any, some, or all of the systems 100, 200, 300. Additionally or alternatively, one or more component of any, some, or all of the systems 100, 200, 300 may be in direct communication (i.e., directly linked to facilitate communication) with another component of any, some, or all of the systems 100, 200, 300. In some examples, the transceiver 312 is a single transceiver. In other examples, the transceiver 312 is a plurality of transceivers.

The welding operation estimation system 300 and/or components thereof (e.g., the control circuitry 310, the sensors 318, the user interfaces 319, etc.) can be included in either or both of the welding-type power systems 100, 200, be included as or in one or more components of either or both of the welding-type power systems 100, 200 (e.g., in either or both of the control circuitries 110, 210, in either or both of the engines 102, 202, in either or both of the electric generators 104, 204, in either or both of the energy storage devices 108, 208, in the AC input power source 209, etc.), and/or be implemented as any, some, or all of the remote computers 317 and/or as another control device.

The welding operation estimation system 300 can use one or more input values (e.g., determined and/or received by the control circuitry 310) associated with one or more operation characteristics of a welding operation (e.g., a welding operation to be performed) to generate one or more welding operation estimations. By comparing the one or more input values to information (e.g., historical information based on any, some, or all of previously-received and/or -determined input values, previously-generated welding operation estimations, and/or previously received- and/or determined-feedback input values) stored in, e.g., the memory storage device 314, the control circuitry 310 can generate one or more welding operation estimations for use in a welding operation. In examples, the control circuitry 310 may, further, receive an indication of a selection of one or more of the welding operation estimations and, e.g., control either or both of the welding-type power systems 100, 200 and/or one or more components thereof according to the selected one or more welding operation estimations.

In some examples, the control circuitry 310 conducts all data processing (e.g., of input values and/or input signals) involved in generating and/or implementing welding operation estimations. In some examples, any, some, or all data processing (e.g., of input values and/or input signals) involved in generating and/or implementing welding operation estimations may be conducted, implemented, and/or assisted, in whole or in part, by the control circuitry 310, the control circuitry 110, the control circuitry 210, and/or one and/or any plurality of the remote computers 317. For example, any, some, or all data processing involved in generating and/or implementing welding operation estimations may be partially or wholly conducted on a smartphone (e.g., in an application), by a cloud and/or remote computing device and/or system, and/or by any one or plurality of computing systems and/or control circuitries.

In some examples, the control circuitry 310 stores all data used in generating and/or implementing welding operation estimations (e.g., input values, historical information, algorithms, etc.) in the memory storage device 314. In some examples, any, some, or all data used in generating and/or implementing welding operation estimations may be stored in the memory storage device 314 of the control circuitry 310, in a memory storage device of the control circuitry 110, in a memory storage device of the control circuitry 210, and/or in one memory storage device and/or any plurality of memory storage devices of one and/or any plurality of the remote computers 317. For example, any, some, or all data used in generating and/or implementing welding operation estimations may be partially or wholly stored on a smartphone (e.g., in an application), on a cloud and/or remote computing device and/or system, on a cloud and/or remote data storage device and/or system, and/or by any one or plurality of computing systems and/or control circuitries.

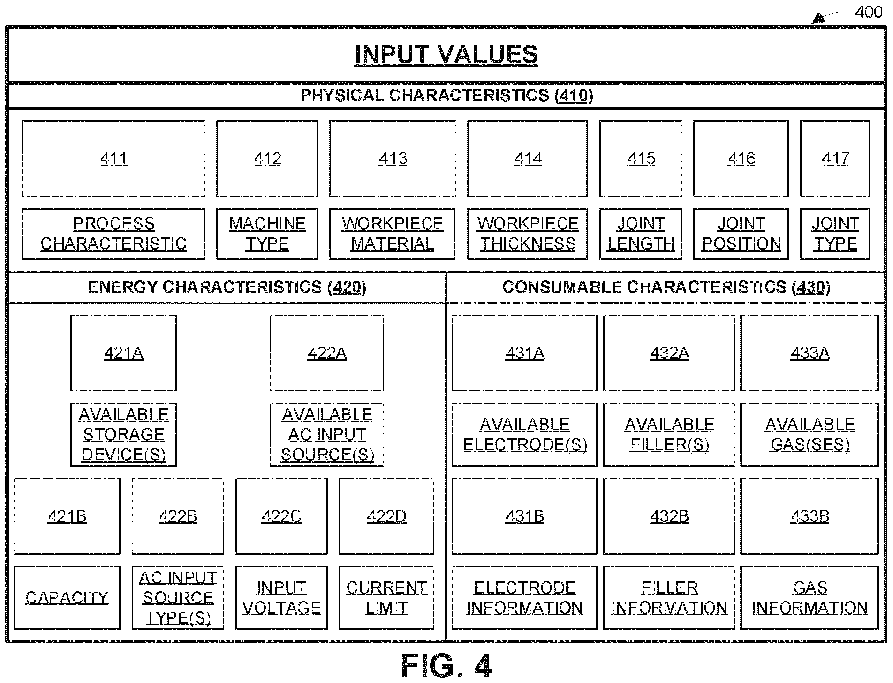

FIG. 4 illustrates an example of an input interface 400 displayed on an input device (e.g., one of the user interfaces 319) of the welding operation estimation system 300. The input interface 400 displays a number of input fields and operating characteristics associated with each input field. Accordingly, a user (e.g., a user of any, some, or all of the systems 100, 200, 300) may use the input interface 400 to input one or more input values. Each input value may be associated with one or more operation characteristics of a welding operation (e.g., a welding operation to be performed by the user, a robot, and/or another person). Using the input interface 400, the welding operation estimation system 300 can receive input values for use in the generation of welding operation estimations.

In examples, one or more input values may (e.g., each and/or collectively) be associated with one or more operation characteristics of a welding operation to be performed. In examples, a welding operation characteristic may be a physical characteristic, an energy characteristic, a consumable characteristic, and/or another characteristic. Accordingly, the input interface 400 may include one or more of any, some, or all of a physical characteristics input interface 410, an energy characteristics input interface 420, and/or a consumable characteristics input interface 430.

In examples, a physical characteristic of a welding operation may be a process characteristic of a welding process used in the welding operation. In some examples, a process characteristic comprises a welding process type of the welding operation (e.g., MIG/GMAW, TIG/GTAW, FCAW, plasma cutting, etc.). In some examples, a process characteristic comprises a welding technique of the welding operation (e.g., seam welding, stitch welding, spot welding, etc.). In examples, a user may provide one or more input values associated with one or more process characteristics (e.g., a selection of a particular welding process type and/or of a particular welding technique) in a process characteristic input field 411 of the physical characteristics input interface 410.

In examples, a physical characteristic of a welding operation may be a machine type of a machine used in the welding operation. In some examples, a machine type is a type of welding-type power system used to power a welding operation (e.g., the first welding-type power system 100, the second welding-type power system 200, and/or a welding-type power system powered by any, some, or all of one or more engines, one or more energy storage devices, and/or one or more AC input power sources). In some examples, a machine type is a type of tool used in a welding operation (e.g., a type of welding torch, a type of wire feeder, etc.) as categorized by, e.g., a product specification of the tool, a brand of the tool, a model name and/or number of the tool, etc. In examples, a plurality of input values associated with a plurality of machine types may be provided to, e.g., indicate to the control circuitry 310 what machine types are available for use in the welding operation. In examples, a user may provide one or more input values associated with one or more machine types (e.g., a selection of one or more particular tools and/or welding-type power systems available for use and/or to be used in the welding operation, a selection of a particular welding-type power system available for use and/or to be used in the welding operation, a specification of a tool and/or welding-type power system available for use and/or to be used in the welding operation) in a machine type input field 412 of the physical characteristics input interface 410.

In examples, a physical characteristic of a welding operation may be a workpiece material (e.g., an elemental makeup) of a workpiece (e.g., one or more objects to be welded) welded in the welding operation. In examples, a user may provide one or more input values associated with one or more workpiece materials of one or more workpieces of a welding operation (e.g., a selection from a drop-down menu listing a plurality of materials) in a workpiece material input field 413 of the physical characteristics input interface 410.

In examples, a physical characteristic of a welding operation may be a workpiece thickness of a workpiece welded in the welding operation. In examples, a user may provide one or more input values associated with one or more workpiece thicknesses of one or more workpieces of a welding operation (e.g., a numerical input of millimeters, centimeters, etc.) in a workpiece thickness input field 414 of the physical characteristics input interface 410.

In examples, a physical characteristic of a welding operation may be a joint length of a welding joint to be formed by the welding operation (e.g., a length of a region of a workpiece to be welded during the welding operation. In examples, a user may provide one or more input values associated with one or more joint lengths of one or more welding joints of a welding operation (e.g., a numerical input of millimeters, centimeters, etc.) in a joint length input field 415 of the physical characteristics input interface 410.

In examples, a physical characteristic of a welding operation may be a joint position of a welding joint to be formed by the welding operation (e.g., an orientation of the joint relative to an operator of a welding torch used for the welding operation). In examples, an input value associated with a joint position may be a selection of, e.g., any, some, or all of an overhead position, a flat position, a horizontal position, a vertical position, and/or one or more other positions. In examples, a user may provide one or more input values associated with one or more joint positions of one or more workpieces of a welding operation (e.g., one or more selections from a drop-down menu listing a plurality of joint positions) in a joint position input field 416 of the physical characteristics input interface 410.

In examples, a physical characteristic of a welding operation may be a joint type of a welding joint to be formed by the welding operation. In examples, an input value associated with a joint position may be a selection of, e.g., any, some, or all of a butt joint, a tee joint, a corner joint, a lap joint, an edge joint, and/or one or more other joint types. In examples, a user may provide one or more input values associated with one or more joint types of one or more workpieces of a welding operation (e.g., one or more selections from a drop-down menu listing a plurality of joint types) in a joint type input field 417 of the physical characteristics input interface 410.

In examples, an energy characteristic of a welding operation may be an energy storage device characteristic of an energy storage device (e.g., the energy storage device 108, the energy storage device 208, a battery pack, etc.). In examples, an energy storage device characteristic may be an indication of a type (e.g., a make and/or model, an identification number, etc.) and/or quantity of one or more energy storage devices available for use in the welding operation. In examples, a user may provide one or more input values associated with one or more types and/or quantities of one or more energy storage devices available for use in the welding operation in an available energy storage devices input field 421A of the energy characteristics input interface 420.

In examples, an energy storage device characteristic may be a capacity of each of one or more energy storage devices (e.g., the one or more energy storage devices for which input values were provided in the available energy storage devices input field 421A). In examples, a user may provide one or more input values associated with one or more capacities of one or more energy storage devices available for use in the welding operation in an energy storage device capacity input field 421B of the energy characteristics input interface 420.

In examples, an energy characteristic of a welding operation may be an AC input power source characteristic of an AC input power source (e.g., the AC input power source 209, the electric generator 104, and/or the electric generator 204) available for use in the welding operation. In examples, an AC input power source characteristic may be an indication of a quantity of one or more AC input power sources available for use in the welding operation. In examples, a user may provide one or more input values associated with one or more types and/or quantities of one or more AC input power sources available for use in the welding operation in an available AC input power sources input field 422A of the energy characteristics input interface 420.

In examples, an energy characteristic of a welding operation may be a type of one or more available AC input power sources (e.g., the one or more AC input power sources for which input values were provided in the available AC input power sources input field 422A). In some such examples, a type of an AC input power source may be a selection indicating that the AC input power source is or comprises one or more power mains, one or more engine-driven generators, one or more generator-powered inverters, and/or one or more battery-powered inverters. In examples, a user may provide one or more input values associated with one or more types of one or more AC input power sources available for use in the welding operation in an AC input power source type input field 422B of the energy characteristics input interface 420.

In examples, an energy characteristic of a welding operation may be an input voltage of one or more available AC input power sources (e.g., a measured and/or maximum voltage of power generated by the one or more AC input power sources for which input values were provided in the available AC input power sources input field 422A). In examples, a user may provide one or more input values associated with one or more input voltages of one or more AC input power sources available for use in the welding operation in an input voltage input field 422C of the energy characteristics input interface 420.

In examples, an energy characteristic of a welding operation may be a current limit of one or more available AC input power sources (e.g., the one or more AC input power sources for which input values were provided in the available AC input power sources input field 422A). For example, a current limit may be, e.g., a number of amps to which power generated by an AC input power source is limited. In examples, a current limit is any, some, or all of a circuit breaker limit, an engine-driven generator rated output, a generator-powered inverter limit, a battery-powered inverter limit, and/or another limit. In examples, a user may provide one or more input values associated with one or more current limits of one or more AC input power sources available for use in the welding operation in a current limit input field 422D of the energy characteristics input interface 420.

In examples, a consumable characteristic of a welding operation may be an electrode characteristic of an electrode (e.g., welding wire, a stick electrode, etc.) available for use in the welding operation. Accordingly, an input value associated with an electrode characteristic may be a quantity of a particular electrode available for use in the welding operation (e.g., a length of welding wire, a weight of welding wire, a quantity of stick electrodes, a weight of stick electrodes, etc.) and/or information relating to a material of the electrode. In examples, a user may provide one or more input values listing available electrodes in an available electrodes input field 431A of the consumable characteristics input interface 430. In examples, a user may provide one or more input values associated with electrode characteristics (e.g., a numerical input in millimeters, centimeters, kilograms, etc.) of one or more available electrodes (e.g., the electrodes for which input values were provided in the available electrodes input field 431A) in an electrode information input field 431B of the consumable characteristics input interface 430.

In examples, a consumable characteristic of a welding operation may be a filler characteristic of a filler material (e.g., a filler wire, a filler metal, a filler rod, etc.) available for use in the welding operation. Accordingly, an input value associated with a filler characteristic may be a quantity of a filler material available for use in the welding operation (e.g., a length of filler wire, a weight of filler wire, a quantity of filler rods, a weight of filler rods, etc.) and/or information relating to a material of the filler material. In examples, a user may provide one or more input values listing available filler materials in an available fillers input field 432A of the consumable characteristics input interface 430. In examples, a user may provide one or more input values associated with filler material characteristics (e.g., a numerical input in millimeters, centimeters, kilograms, etc.) of one or more available filler materials (e.g., the filler materials for which input values were provided in the available fillers input field 432A) in a filler information input field 432B of the consumable characteristics input interface 430.

In examples, a consumable characteristic of a welding operation may be a gas characteristic of a shielding gas (e.g., carbon dioxide, argon, helium, oxygen, etc.) available for use in the welding operation. Accordingly, an input value associated with a gas characteristic may be a quantity of a shielding gas available for use in the welding operation (e.g., a number of gas canisters, a volume and/or weight of available gas, etc.) and/or information relating to a chemical makeup of the shielding gas. In examples, a user may provide one or more input values listing available shielding gasses in an available gasses input field 433A of the consumable characteristics input interface 430. In examples, a user may provide one or more input values associated with gas characteristics of one or more available shielding gasses (e.g., the shielding gasses for which input values were provided in the available gasses input field 433A) in a gas information input field 433B of the consumable characteristics input interface 430.

In examples, any, some, or all of the input interfaces 400, 410, 420, 430 may omit, combine, duplicate, or otherwise modify any, some, or all of the input fields 411, 412, 413,414, 415, 416, 417, 421AM 421B, 422A, 422B, 422C, 422D, 431A, 431B, 432A, 432B, 433A, 433B. In examples, the input interface 400 may differ in appearance from the depiction of FIG. 4. In examples, the input interface 400 may be a plurality of interfaces. For example, the physical characteristics input interface 410 may be displayed on one or more first user interfaces of the user interfaces 319, the energy characteristics input interface 420 may be displayed on one or more of second user interfaces of the user interfaces 319, and the consumable characteristics input interface 430 may be displayed on one or more third user interfaces of the user interfaces 319. In examples, any, some, or all of the input fields 411, 412, 413,414, 415, 416, 417, 421AM 421B, 422A, 422B, 422C, 422D, 431A, 431B, 432A, 432B, 433A, 433B may be, e.g., a visual input field modifiable by a touch screen and/or a keyboard, a switch, a knob, a dial, and/or any other user-manipulatable device.

Referring again to FIG. 3, in examples, the control circuitry 310 can receive one or more input values in one or more input signals received (e.g., via the transceiver 312, via one or more of the interfaces 313, and/or one or more direct links) from any, some, or all of one or more of the control systems 316, one or more of the remote computers 317, one or more of the sensors 318, and/or one or more of the user interfaces 319. In examples, the control circuitry 310 receives input values only from the one or more user interfaces 319 (e.g., by one or more users inputting the input values into the input interface 400). In some examples, however, the control circuitry 310 additionally and/or alternatively receives and/or determines one or more input values by receiving one or more input signals generated by one or more of the control systems 316, one or more of the remote computers 317, and/or one or more of the sensors 318.

For example, one or more of the sensors 318 may generate one or more input signals and provide the one or more input signals to the control circuitry 310. In examples, one or more of the input signals comprise one or more input values associated with one or more welding operations. In examples, one or more of the input signals are used by the control circuitry 310 to determine one or more input values associated with one or more welding operations. In some examples, one or more of the sensors 318 may generate one or more input signals comprising or usable (by, e.g., the control circuitry 310) to determine one or more input values associated with one or more physical characteristics of a welding operation (e.g., a workpiece thickness, a workpiece type, a joint type, a joint position, and/or a joint length). In some examples, one or more of the sensors 318 may generate one or more input signals comprising or usable (by, e.g., the control circuitry 310) to determine one or more input values associated with one or more characteristics of one or more energy sources (e.g., an availability of an energy source, a type of an energy source, a capacity of an energy source, an input voltage of an energy source, and/or an AC input current limit of an energy source). In some examples, one or more of the sensors 318 may generate one or more input signals comprising or usable (by, e.g., the control circuitry 310) to determine one or more input values with one or more characteristics of one or more consumables (e.g., an availability of a consumable, a material of a consumable, a length of a consumable, a weight of a consumable, and/or a quantity of a consumable).

For example, one or more of the sensors 318 (e.g., imaging sensors, weight sensors, etc.) may generate one or more first input signals containing first input values indicating a quantity of available battery packs (e.g., the energy storage device 108 and/or the energy storage device 208) and one or more of the remote computers 317 (e.g., control circuitry of charging infrastructure for the available battery packs) may generate one or more second input signals containing second input values indicating a capacity of each of the battery packs (based on, e.g., specifications of each battery pack and/or usage history of each battery pack stored on one or more of the remote computers 317). In some examples, the control circuitry 310 receives one or more input values provided by a user (e.g., by inputting the input values into one or more of the user interfaces 319) and one or more input values generated by any, some, or all of one or more of the control systems 316, one or more of the remote computers 317, one or more of the sensors 318, and/or one or more of the user interfaces 319.

Accordingly, whether by input into one of the user interfaces 319 or by receipt of an input signal from any, some, or all of one or more of the control systems 316, one or more of the remote computers 317, and/or one or more of the sensors 318, the control circuitry 310 may generate and/or be provided with input values associated with one or more operation characteristics of a welding operation to be formed. Using the input values, the control circuitry 310 can generate one or more welding operation estimations based on the input values.

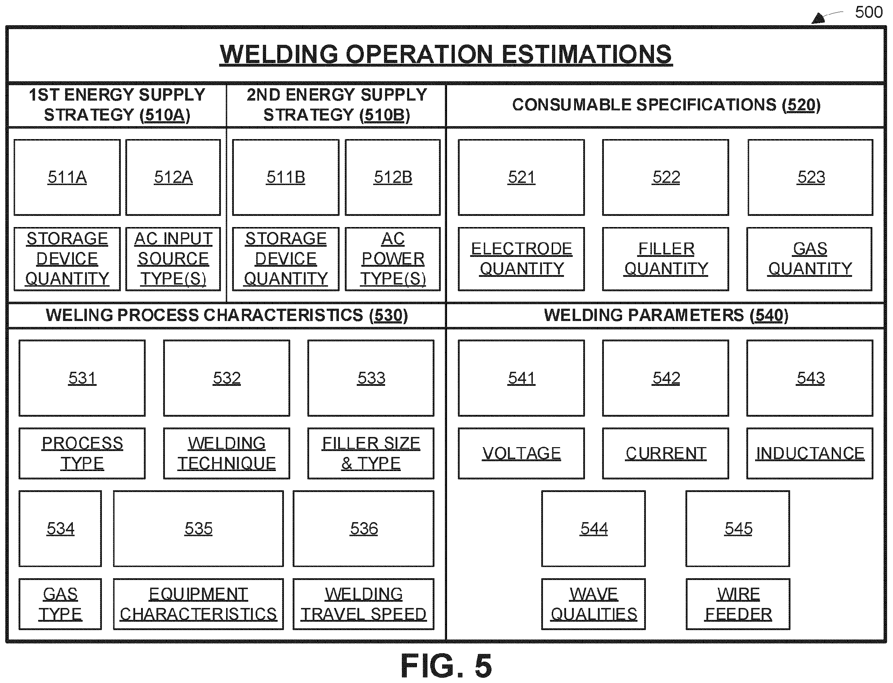

FIG. 5 illustrates an example of an output interface 500 displayed on an indication device (e.g., one of the user interfaces 319) of the welding operation estimation system 300. The output interface 500 displays a number of indications of one or more welding operation estimations of a welding operation generated by the control circuitry 310 based on one or more input values associated with one or more operation characteristics of the welding operation. In examples, one or more welding operation estimations may include any, some, or all of one or more energy supply strategies, one or more consumable specifications, one or more recommended welding process characteristics, and/or one or more recommended values for one or more welding parameters. Accordingly, the output interface 500 may include one or more of any, some, or all of a first energy supply strategy interface 510A, a second energy supply strategy interface 510B, a consumable specifications interface 520, a welding process characteristics interface 530, and/or a welding parameters interface 540.

In examples, one or more of the welding operation estimations generated by the control circuitry 310 may be an energy supply strategy for a welding operation. Conducting a welding operation generally requires an energy source (e.g., the engines 102, 202, the energy storage devices 108, 208, the AC input power source 209, etc.), and so conducting a welding operation may include determining a (combination of) energy source(s) which might be sufficient to conduct the welding operation. However, an energy usage of a welding operation might be difficult for, e.g., a novice welding operator to estimate. Further, even an experienced welding operator will likely be unable to accurately guess an amount of energy necessary to conduct a welding operation, due to the broad array of operation characteristics which might influence energy consumption during the welding operation. For example, altering even one of any, some, or all of the operation characteristics associated with any, some, or all of the input fields 411, 412, 413,414, 415, 416, 417, 421AM 421B, 422A, 422B, 422C, 422D, 431A, 431B, 432A, 432B, 433A, 433B may vary a total welding operation energy of the welding operation (e.g., a total amount of energy consumed during the welding operation). Further still, different choices which may alternatively be made to conduct the same welding operation (e.g., the selection of specific welding operation estimations for which additional, alternative welding operation estimations are available) may also affect a total welding operation energy of the welding operation and/or available energy supply strategies (e.g., due to the variances in the total welding operation energy and/or variances in required voltages, current magnitudes, etc.). Accordingly, determining a total welding operation energy and/or a holistic listing of available, alternative, and/or viable energy supply strategies may be impractical and/or impossible (due to, e.g., a number of variables used to calculate a total welding energy and/or determine an energy supply strategy and/or timing constraints of the welding operation) for the welding operator to accomplish on his or her own. Accordingly, a welding operator may likely make decisions regarding energy supply for a welding operation which inefficiently allocates energy supply resources (e.g., by bringing too many energy storage devices) and/or which provides an insufficient amount of energy to conduct the welding operation.

However, using e.g., a broad array historical information based on any, some, or all of previously-received and/or -determined input values, previously-generated welding operation estimations, and/or previously received- and/or determined-feedback input values (stored in, e.g., the memory storage device 314), the control circuitry 310 can determine one or more total welding operation energies of the welding operation and determine, using the one or more total welding operation energies of the welding operation, one or more energy supply strategies.

An energy strategy may include a quantity (e.g., one, none, or any plurality) of particular energy storage devices (e.g., the energy storage device 108, the energy storage device 208, and/or any, some, or all of any energy storage devices for which input values were received in any of the input fields 421A, 421B and/or via one or more other input signals) and/or a quantity (e.g., one, none, or any plurality) of particular AC input power source types (e.g., the engine 102, the engine 202, the electric generator 104, the electric generator 204, the AC input power source 209, and/or one or more other AC input power sources for which input values were received in any of the input fields 422A, 422B, 422C, 422D and/or via one or more input signals). Using, e.g., any of the energy characteristics described above, the control circuitry 310 may determine one or more combinations of energy sources which provides sufficient energy for the welding operation.

Accordingly, the first energy supply strategy interface 510A may display a first quantity of storage devices 511A having a specified capacity (as may be determined by, e.g., available energy storage devices indicated by input values) and/or a first quantity of AC input power source types 512A in the first energy supply strategy interface 510A. However, in some examples, the control circuitry 310 may determine a plurality of available energy supply strategies. For example, a first energy supply strategy and a second energy supply strategy may both include usage only of energy storage devices, but each supply strategy may include different combinations of different energy storage devices. As another example, different energy supply strategies may swap one AC input power source (e.g., the engine 202 and the electric generator 204) for another AC input power source (e.g., the AC input power source 209). Accordingly, the output interface 500 may also include the second energy supply strategy interface 510B, which displays a second quantity of storage devices 511A having a specified capacity and/or a second quantity of AC input power sources 512B.

In some examples, either or both of the quantities of storage devices 511A, 511B may comprise exclusively storage devices having equal capacity. In some examples, either or both of the quantities of storage devices 511A, 511B may include one or more storage devices having differing capacities. In some examples, either or both of the quantities of AC input power source types 512A, 512B may include one or more of one type of AC input power source and/or one or more of a plurality of different types of AC input power sources (e.g., one or more of any, some, or all of the engine 102, the electric generator 104, the energy storage device 108, the engine 202, the electric generator 204, the energy storage device 208, and/or the AC input power source 209).

In examples, either or both of the quantities of storage devices 511A, 511B and/or the quantities of AC input power source types 512A, 512B may differ between distinct energy supply strategies. In some examples, only one energy supply strategy may be generated. In some examples, any plurality of energy supply strategies may be generated. In some examples, no energy supply strategies may be generated. In some such examples, no energy supply strategies may be generated due to insufficient input values (e.g., input values relating to an insufficient number of operation characteristics) being provided to the control circuitry 310. In other such examples, no energy supply strategies may be generated due to there not being any combination of available energy storage devices and/or available AC input power sources (as indicated by input values associated with the same) which provides sufficient power (e.g., less than the total welding operation energy, or less than a pre-determined threshold of the total welding operation energy) to conduct the welding operation. In some such examples, the output interface 500 may display an indication that the welding operation is not possible.

In some examples, an energy supply strategy may be an energy storage device supply strategy comprising a quantity of energy storage devices (e.g., either of the quantities of storage devices 511A, 511B). In some such examples, the energy storage device supply strategy does not comprise any AC input power sources (e.g., the energy storage device supply strategy does not include either of the quantities of AC input power source types 512A, 512B). In some examples, an energy supply strategy may be a combined source energy supply strategy comprising a quantity of energy storage devices (e.g., either of the quantities of storage devices 511A, 511B) and a quantity of one or more types of AC input power sources (e.g., either of the quantities of AC input power source types 512A, 512B).

In examples, a user and/or one or more of the control systems 316 may select one of a plurality of generated energy supply strategies (e.g., the energy supply strategy of the first energy supply strategy interface 510A or the energy supply strategy of the second energy supply strategy interface 510B) for use in the welding operation. Upon receiving an indication of one or more selected energy supply strategies, the control circuitry 310 may use communication circuitry (e.g., the transceiver 312, one or more of the interfaces 313, a direct link, etc.) to control a welding-type power system (e.g., either or both of the welding-type power systems 100, 200) and/or a component thereof (e.g., either or both of the control circuitries 110, 210) to operate according to the selected energy supply strategy (e.g., controlling the total power output 218 to include proportions of any, some, or all of the power outputs 214, 216, 217 according to the selected energy supply strategy).

In examples, one or more energy supply strategies may be associated with a particular combination of any, some, or all of one or more consumable specifications, one or more recommended welding process characteristics, and/or one or more recommended welding parameters. For example, a first recommended welding process characteristic may be a first welding technique, a second (alternative) recommended welding process characteristic may be a second welding technique, and each of the welding techniques may differ in energy consumption (and, thereby, result in distinct total welding operation energies). Accordingly, the control circuitry 310 may generate one or more first energy supply strategies associated with usage of the first welding technique (and/or one or more other welding operation estimations) and one or more second energy supply strategies associated with usage of the second welding technique (and/or one or more other welding operation estimations).

In examples, one or more of the welding operation estimations generated by the control circuitry 310 may be a consumable specification for a welding operation. A consumable specification is a listing of one or more types and/or quantities of one or more consumables (e.g., one or more electrodes, one or more filler materials, one or more shielding gasses, and/or one or more other consumables) which may be sufficient to conduct the welding operation. Conducting a welding operation generally includes the use of one or more consumables (e.g., an electrode, filler material, shielding gas, etc.). However, types and quantities of one or more consumables which may be consumed during a welding operation might be difficult for, e.g., a novice welding operator to estimate. Further, even an experienced welding operator will likely be unable to accurately guess an amount of energy necessary to conduct a welding operation, due to the broad array of operation characteristics which might influence one or more types of consumable needed and/or one or more rates of consumable consumption during the welding operation. For example, altering even one of any, some, or all of the operation characteristics associated with any, some, or all of the input fields 411, 412, 413,414, 415, 416, 417, 421AM 421B, 422A, 422B, 422C, 422D, 431A, 431B, 432A, 432B, 433A, 433B may vary one or more types of consumable needed and/or one or more rates of consumable consumption of the welding operation. Further still, different choices which may alternatively be made to conduct the same welding operation (e.g., the selection of specific welding operation estimations for which additional, alternative welding operation estimations are available) may also affect one or more types of consumable needed and/or one or more rates of consumable consumption of the welding operation and/or available energy supply strategies (e.g., by affecting a type or quantity of electrode, filler material, and/or shielding gas sufficient or usable for the welding operation). Accordingly, determining a holistic listing of available, alternative, and/or viable consumable specifications may be impractical and/or impossible (due to, e.g., a number of variables used to calculate one or more consumable specifications and/or timing constraints of the welding operation) for the welding operator to accomplish on his or her own. Accordingly, a welding operator may likely make decisions regarding consumable types to use and/or quantities thereof to bring in and/or to a welding operation which inefficiently allocates consumable resources (e.g., by bringing too large a quantity of one or more consumables) and/or which provides an insufficient amount of consumables to conduct the welding operation.

However, using e.g., a broad array historical information based on any, some, or all of previously-received and/or -determined input values, previously-generated welding operation estimations, and/or previously received- and/or determined-feedback input values (stored in, e.g., the memory storage device 314), the control circuitry 310 can determine one or more one or more consumable specifications.

A consumable specification may include a choice of one or more types of a consumable. For example, a consumable specification may include a choice of a welding wire of a particular diameter, material, etc. A consumable specification may additionally and/or alternatively include a quantity of a consumable (e.g., a length of a particular welding wire). Using, e.g., any of the operation characteristics described above, the control circuitry 310 may determine one or more consumable specifications of one consumable (a specification comprising e.g., only a quantity and/or type of electrode, only a quantity and/or type of filler material, or only a quantity and/or type of shielding gas) and/or of a plurality of consumables (a specification comprising, e.g., a combination of any, some, or all of a quantity and/or type of electrode, a quantity and/or type of filler material, and/or a quantity and/or type of shielding gas).

Accordingly, the consumable specifications interface 520 may display any, some, or all of one or more of an electrode quantity 521 (including, in examples, one or more types of electrodes associated with the electrode quantity 521), one or more of a filler quantity 522 (including, in examples, one or more types of filler materials associated with the filler quantity 522), and/or one or more of a gas quantity 523 (including, in examples, one or more types of shielding gasses associated with the gas quantity 523). Any, some, or all of the quantities 521, 522, 523 may be in units of length, weight, number (e.g., of filler rods and/or electrode sticks), etc. In examples, any, some, or all of the quantities 521, 522, 523 may be independently calculated, selectable, and/or provided. In other examples, any, some, or all of the quantities 521, 522, 523 may be collectively calculated, selectable, and/or provided. In examples, the output interface 500 may display none of, one of, and/or any plurality of the consumable specifications interface 520 (e.g., in a manner similar to the energy supply strategy interfaces 510A, 510B).

In examples, any, some, or all of the quantities 521, 522, 523 may differ between distinct consumable specifications. In some examples, only one consumable specification may be generated. In some examples, any plurality of consumable specifications may be generated. In some examples, no consumable specifications may be generated. In some such examples, no consumable specifications may be generated due to insufficient input values (e.g., input values relating to an insufficient number of operation characteristics) being provided to the control circuitry 310. In other such examples, no energy supply strategies may be generated due to there not being any combination of available consumables sufficient to conduct the welding operation. In some such examples, the output interface 500 may display an indication that the welding operation is not possible.

In examples, a user and/or one or more of the control systems 316 may select one of a plurality of consumable specifications for use in the welding operation. Upon receiving an indication of one or more selected consumable specifications, the control circuitry 310 may use communication circuitry (e.g., the transceiver 312, one or more of the interfaces 313, a direct link, etc.) to control a welding-type power system (e.g., either or both of the welding-type power systems 100, 200) and/or a component thereof (e.g., either or both of the control circuitries 110, 210) to operate according to the selected energy supply strategy (e.g., operate according to a mode adapted to usage of one or more of the consumables of the selected consumable specification).

In examples, one or more consumable specifications may be associated with a particular combination of any, some, or all of one or more energy supply strategies, one or more recommended welding process characteristics, and/or one or more recommended welding parameters. For example, a first recommended welding process characteristic may be a first welding technique, a second (alternative) recommended welding process characteristic may be a second welding technique, and each of the welding techniques may differ in consumable types necessary for the welding operation and/or in rates of consumption of a consumable. Accordingly, the control circuitry 310 may generate one or more first consumable specifications associated with usage of the first welding technique (and/or one or more other welding operation estimations) and one or more second consumable specifications associated with usage of the second welding technique (and/or one or more other welding operation estimations).

In examples, one or more of the welding operation estimations generated by the control circuitry 310 may be a recommended welding process characteristic. Recommended welding process characteristics displayed by the control circuitry 310 on the welding process characteristics interface 530 may include one or more indications of any, some, or all of one or more process types 531 sufficient for and/or capable of conducting the welding operation (e.g., MIG/GMAW, TIG/GTAW, FCAW, plasma cutting, etc.), one or more welding techniques 532 sufficient for and/or capable of conducting the welding operation (e.g., seam welding, stitch welding, spot welding, etc.), one or more types of filler material 533 sufficient for and/or capable of conducting the welding operation (e.g., an aluminum alloy, a bronze alloy, a copper alloy, etc.), one or more types of shielding gas 534 sufficient for and/or capable of conducting the welding operation, one or more welding equipment characteristics 535 sufficient for and/or capable of conducting the welding operation (e.g., a specific piece of welding equipment, a performance specification for a type of welding equipment, a welding equipment setting, etc.), and/or one or more welding travel speeds 536 sufficient for and/or capable of conducting the welding operation (e.g., a travel speed of a welding torch during the welding operation).

In examples, the control circuitry 310 may generate and/or display only one of, none of, and/or any plurality of any, some, or all of the recommended welding process characteristics 531, 532, 533, 534, 535, 536. In examples, any, some, or all of the recommended welding process characteristics 531, 532, 533, 534, 535, 536 may be independently calculated, selectable, and/or provided. In other examples, any, some, or all of the recommended welding process characteristics 531, 532, 533, 534, 535, 536 may be collectively calculated, selectable, and/or provided. In examples, the output interface 500 may display none of, one of, and/or any plurality of the welding process characteristics interface 530 (e.g., in a manner similar to the energy supply strategy interfaces 510A, 510B).

In examples, a user and/or one or more of the control systems 316 may select one or more of a plurality of generated recommended welding process characteristics of and, some, or all of the recommended welding process characteristics 531, 532, 533, 534, 535, 536 for use in the welding operation. Upon receiving an indication of one or more selected welding process characteristics, the control circuitry 310 may use communication circuitry (e.g., the transceiver 312, one or more of the interfaces 313, a direct link, etc.) to control a welding-type power system (e.g., either or both of the welding-type power systems 100, 200) and/or a component thereof (e.g., either or both of the control circuitries 110, 210) to operate according to the selected welding process characteristic(s) (e.g., controlling the total power output 218 to be adapted for the selected process type of the process types 531).

In examples, one or more of the recommended welding process characteristics 531, 532, 533, 534, 535, 536 may be associated with a particular combination of any, some, or all of one or more energy supply strategies, one or more consumable specifications, one or more other recommended welding process characteristics, and/or one or more recommended welding parameters.

In examples, one or more of the welding operation estimations generated by the control circuitry 310 may be a recommended welding parameter. Recommended welding parameters displayed by the control circuitry 310 on the welding parameters interface 540 may include one or more indications of any, some, or all of one or more voltage parameters 541 sufficient for and/or capable of conducting the welding operation (e.g., a voltage setpoint, a peak pulse voltage, a background pulse voltage, a voltage ramp rate, etc.), one or more current parameters 542 sufficient for and/or capable of conducting the welding operation (e.g., a current setpoint, a peak pulse current, a background pulse current, a short circuit-clearing current, a current ramp rate, etc.), one or more inductance parameters 543 sufficient for and/or capable of conducting the welding operation (e.g., a target inductance, a range of inductances, etc.), one or more wave qualities 544 of an electrical current sufficient for and/or capable of conducting the welding operation (e.g., an AC frequency, an AC balance, an AC wave shape, etc.), and/or one or more wire feeder parameters 545 sufficient for and/or capable of conducting the welding operation (e.g., an operation wire feed speed, a run-in wire feed speed, a hot start wire feed speed, a wire feed speed ramp rate, etc.).

In examples, the control circuitry 310 may generate and/or display only one of, none of, and/or any plurality of any, some, or all of the recommended welding parameters 541, 542, 543, 544, 545. In examples, any, some, or all of the recommended welding parameters 541, 542, 543, 544, 545 may be independently calculated, selectable, and/or provided. In other examples, any, some, or all of the recommended welding parameters 541, 542, 543, 544, 545 may be collectively calculated, selectable, and/or provided. In examples, the output interface 500 may display none of, one of, and/or any plurality of the welding parameters interface 540 (e.g., in a manner similar to the energy supply strategy interfaces 510A, 510B).

In examples, a user and/or one or more of the control systems 316 may select one or more of a plurality of generated recommended welding parameters of and, some, or all of the recommended welding parameters 541, 542, 543, 544, 545 for use in the welding operation. Upon receiving an indication of one or more selected welding parameters, the control circuitry 310 may use communication circuitry (e.g., the transceiver 312, one or more of the interfaces 313, a direct link, etc.) to control a welding-type power system (e.g., either or both of the welding-type power systems 100, 200)and/or a component thereof (e.g., either or both of the control circuitries 110, 210) to operate according to the selected welding process characteristic(s) (e.g., controlling the total power output 218 to be adapted for the selected process type of the process types 531).

In examples, one or more of the recommended welding process characteristics 531, 532, 533, 534, 535, 536 may be associated with a particular combination of any, some, or all of one or more energy supply strategies, one or more consumable specifications, one or more other recommended welding process characteristics, and/or one or more recommended welding parameters.

In examples, any, some, or all input values provided to the control circuitry 310 (e.g., input values provided in any, some, or all of the may be used to calculate any, some, or all of the input fields 411, 412, 413,414, 415, 416, 417, 421AM 421B, 422A, 422B, 422C, 422D, 431A, 431B, 432A, 432B, 433A, 433B) may be used to calculate any welding operation estimation, including any, some, or all of an energy supply strategy (e.g., the energy supply strategies of either or both of the energy supply strategy interfaces 510A, 510B), a consumable specification (e.g., any, some, or all of the quantities 521, 522, 523), a recommended welding process characteristic (e.g., any, some, or all of the recommended welding process characteristics 531, 532, 533, 534, 535, 536), and/or a recommended welding parameter (e.g., any, some, or all of the recommended welding parameters 541, 542, 543, 544, 545). Further, any one or more welding operation estimations (e.g., an energy supply strategy, one or more consumable specifications, one or more recommended welding process characteristics, and/or one or more recommended welding parameters) may be used to generate further welding operation estimations (e.g., an energy supply strategy, one or more consumable specifications, one or more recommended welding process characteristics, and/or one or more recommended welding parameters). For example, an energy supply strategy may be a function of a chosen process type of the process types 531.

In examples, the welding operation estimation system 300 may iteratively revise the data and algorithms (stored on, e.g., the memory storage device 314) used to generate welding operation estimations. For example, after a welding operation is completed, the welding operation estimation system 300 may receive feedback input values from, e.g., any, some, or all of one or more of the control systems 316, one or more of the remote computers 317, one or more of the sensors 318, and/or one or more of the user interfaces 319 (as input by, e.g., a user in the input interface 400). Each of the feedback input values may correspond to one or more welding operation estimations previously generated by the welding operation estimation system 300 for the welding operation of the feedback input values. The control circuitry 310 may compare the feedback input values to one or more welding operation estimations and determine, based on the comparing of the one or more feedback input values to the selected welding operation, one or more estimation process modifications. The estimation modifications may be, e.g., modifications and/or additions to historical data and/or algorithms (stored on, e.g., the memory storage device 314) used by the control circuitry 310 for welding operation estimation. Accordingly, when generating subsequent welding operation estimations based on one or more similar input values as the welding operation for which the feedback input values were received, the control circuitry 310 may use one or more of the estimation modifications to generate such subsequent welding operation estimations.

In examples, any, some, or all of the interfaces 500, 510A, 510B, 520, 530, 540 may omit, combine, duplicate, or otherwise modify any, some, or all of the values, fields, and/or indications depicted in FIG. 5. In examples, the output interface 500 may differ in appearance from the depiction of FIG. 5. In examples, the output interface 500 may be a plurality of interfaces. For example, the energy supply strategy interfaces 510A, 510B may be displayed on one or more first user interfaces of the user interfaces 319, the consumable specifications interface 520 may be displayed on one or more of second user interfaces of the user interfaces 319, the welding process characteristics interface 530 may be displayed on one or more third user interfaces of the user interfaces 319, and the welding parameters interface 540 may be displayed on one or more fourth user interfaces of the user interfaces 319. In examples, any, some, or all of the values, fields, and/or indications depicted in FIG. 5 may be, e.g., a visual indication selectable and/or modifiable by a touch screen and/or a keyboard, a switch, a knob, a dial, and/or any other user-manipulatable device.

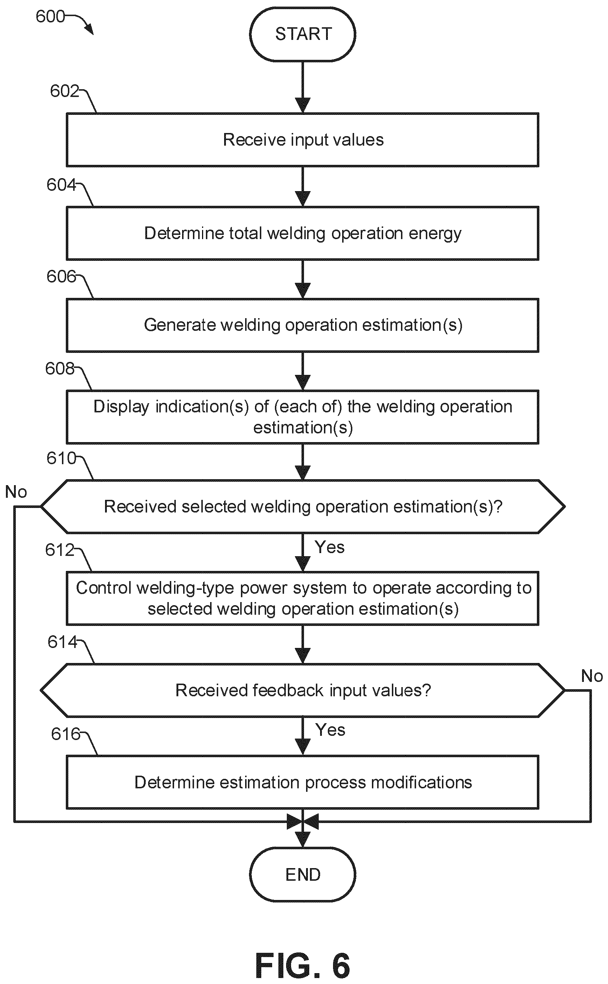

FIG. 6 is a flowchart illustrating an example method 600 of operating the welding operation estimation system 300 and/or either or both of the welding-type power systems 100, 200. The method 600 may be implemented by the control circuitry 310 and/or one or more other control circuitries (e.g., the control circuitry 110, the control circuitry 210, control circuitry of one or more of the remote computers 317, etc.) by executing machine-readable instructions, e.g., stored on a non-transitory machine-readable storage device (e.g., the memory storage device 314). In describing the method 600, reference will be made to the examples of FIGS. 1-5. However, the method 600 may be used with other examples, such as alternative examples described elsewhere herein.

At a block 602 of the method 600, the control circuitry310 receives input values associated with one or more operation characteristics of a welding operation to be performed. The control circuitry 310 may receive input values from any, some, or all of one or more of the control systems 316, one or more of the remote computers 317, one or more of the sensors 318, and/or one or more of the user interfaces 319 (e.g., by a user using the input interface 400).

At a block 604 of the method 600, the control circuitry 310 determines one or more total welding operation energies of the welding operation for which input values were received in the block 602.

At a block 606 of the method 600, the control circuitry 310 generates one or more welding operation estimations using the one or more input values received in the block 602 and/or the one or more total welding operation energies determined in the block 604.

In some examples (e.g., examples wherein energy supply strategies are generated based on one or more other generated welding operation estimations), the block 606 may occur before the block 604. In some such examples, the one or more total welding operation energies are determined based on one or more of the welding operation estimations generated in the block 604. In some examples, the block 606 occurs both before the block 604 (e.g., one or more first welding operation estimations are generated prior to determining one or more total welding operation energies) and after the block 604 (e.g., one or more second welding operation estimations are generated after determining one or more total welding operation energies).

At a block 608 of the method 600, the control circuitry 310 displays (e.g., on one or more of the user interfaces 319) one or more indications (e.g., any, some, or all of the interfaces 500, 510, 520, 530, 540) of each of the welding operation estimations generated in the block 606. In some examples, upon displaying the one or more indications of each of the welding operation estimations generated in the block 606, the method 600 concludes.

At a block 610 of the method 600, the control circuitry 310 awaits receipt (via, e.g., an input signal) of a selection (e.g., by one or more users using one or more of the user interfaces 319), one or more of the control systems 316, one or more of the remote computers 317, etc.) of one or more of the indications of welding operation estimations displayed at the block 608. In some examples (e.g., after a pre-determined amount of time has elapsed without receipt of a selection), the method 600 ends.

However, if the control circuitry 310 does receive one or more selections of one or more of the welding operation estimations, the control circuitry proceeds to a step of a block 612. At the step of the block 612, the control circuitry 310 controls a welding-type power system (e.g., either or both of the welding-type power systems 100, 200) and/or a component thereof (e.g., either or both of the control circuitries 110, 210) to operate according to the selected welding operation estimations. In some examples, after the welding operation is concluded, the method 600 ends after the block 612.

At a block 614 of the method 600, the control circuitry 310 awaits receipt (via, e.g., an input signal) of one or more feedback input values associated with one or more of the welding operation estimations generated in the block 606 and/or selected in the block 614. In some examples (e.g., after a pre-determined amount of time has elapsed without receipt of a feedback input value), the method 600 ends. In some examples, the method 600 proceeds directly from the step of the block 608 to the step of the block 614.

At a block 616 of the method 600, the control circuitry compares the one or more feedback input values to a selected welding operation estimation of the one or more welding operation estimations generated in the block 606 and/or selected in the block 610 and determines one or more estimation process modifications. Accordingly, the control circuitry 310 may utilize the one or more estimation process modifications in determining total welding operation energies and/or generating welding operation estimations in subsequent iterations of the method 600.

While the present method, apparatus, and/or system has been described with reference to certain implementations, it will be understood by those skilled in the art that various changes, modifications, and variations may be made to the present disclosure and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A welding operation estimation system, comprising:
   one or more input devices configured to receive one or more input values, wherein each of the input values is associated with an operation characteristic of a welding operation to be performed;
   one or more indication devices configured to indicate one or more welding operation estimations; and
   control circuitry configured to:
      determine, based on one or more of the input values, a total welding operation energy of the welding operation;
      generate, based on one or more of the input values and the total welding operation energy, one or more welding operation estimations; and
      control the one or more indication devices to display one or more indications of the one or more welding operation estimations.
Clause 2. The welding operation system as defined in clause 1, further comprising communication circuitry, wherein the control circuitry is further configured to use the communication circuitry to transmit a control signal to a welding-type power system to control the welding-type power system to operate according to at least one of the welding operation estimations.
Clause 3. The welding operation estimation system as defined in clause 1, wherein:
   the control circuitry is further configured to determine, based on one or more of the input values, one or more recommended values for welding parameters for the welding operation; and
   the estimating of the one or more welding operation estimations is based on one or more of the recommended values for the welding parameters.
Clause 4. The welding operation estimation system as defined in clause 3, further comprising communication circuitry, wherein the control circuitry is further configured to use the communication circuitry to transmit a control signal to a welding-type power system to control the welding-type power system to operate according to the one or more recommended values for the welding parameters.
Clause 5. The welding operation estimation system as defined in clause 3, wherein the determining of the total welding operation energy is based on the one or more recommended values for the welding parameters.
Clause 6. The welding operation estimation system as defined in clause 1, wherein:
   the control circuitry is further configured to determine, based on one or more of the input values, a consumable specification comprising a quantity of a consumable of the welding operation; and
   the estimating of the one or more welding operation estimations is further based on the welding operation consumable quantity.
Clause 7. The welding operation estimation system as defined in clause 1, wherein the control circuitry is configured to determine the total welding operation energy as a total number of watt-hours or a number of minutes of welding.
Clause 8. The welding operation estimation system as defined in clause 1, wherein the control circuitry is further configured to determine, based on one or more of the input values, one or more recommended welding process characteristics for the welding operation.
Clause 9. The welding operation estimation system as defined in clause 8, wherein the control circuitry is configured to determine the total welding operation energy based on the one or more recommended welding process characteristics.
Clause 10. The welding operation estimation system as defined in clause 1, wherein the operation characteristics comprise at least one physical characteristic of the welding operation, at least one consumable characteristic of one or more available consumables, and at least one energy characteristic of one or more available energy sources.
Clause 11. The welding operation estimation system as defined in clause 1, wherein each of the one or more welding operation estimations comprises an energy supply strategy.
Clause 12. The welding operation estimation system as defined in clause 11, wherein at least one of the energy supply strategies is an energy storage device supply strategy comprising a quantity of energy storage devices having a specified capacity.
Clause 13. The welding operation estimation system as defined in clause 12, wherein the quantity of energy storage devices is generated based on a power source input of the one or more input values, the power source input comprising of an indication of an availability of AC input power and a type of the AC input power source.
Clause 14. The welding operation estimation system as defined in clause 13, wherein the type of the AC input power source comprises at least one of an AC input voltage, an AC input power source type, or an AC input current limit.
Clause 15. The welding operation estimation system as defined in clause 11, wherein at least one of the energy supply strategies is a combined source energy supply strategy comprising an energy source combination of a quantity of energy storage devices and an AC input power source.
Clause 16. The welding operation estimation system as defined in clause 15, wherein the energy source combination is generated based on a power source input of the one or more input values, the power source input comprising an indication of an availability of the AC input power source and a type of the AC input power source.
Clause 17. The welding operation estimation system as defined in clause 11, wherein at least one of the energy supply strategies comprises a plurality of energy source combinations of quantities of energy storage devices and AC input power sources.
Clause 18. The welding operation estimation system as defined in clause 11, further comprising communication circuitry, wherein the control circuitry is further configured to use the communication circuitry to transmit a control signal to a welding-type power system to control the welding-type power system to operate according to at least one of the energy supply strategies.
Clause 19. The welding operation system as defined in clause 1, further comprising one or more feedback input devices configured to receive one or more feedback input values, wherein:
   each of the feedback input values is associated with a completed welding operation characteristic of a completed welding operation; and
   the control circuitry is further configured to:
      compare the one or more feedback input values to a selected welding operation estimation of the one or more welding operation estimations;
      determine, based on the comparing of the one or more feedback input values to the selected welding operation, one or more estimation process modifications; and
      generate one or more subsequent welding operation estimations based on one or more subsequent input values, a subsequent welding operation energy, and one or more of the estimation process modifications.
Clause 20. A welding system, comprising:
   power conversion circuitry configured to convert input power to welding-type power;
   one or more input devices configured to receive one or more input values, wherein each of the input values is associated with an operation characteristic of a welding operation to be performed;
   one or more indication devices configured to indicate one or more welding operation estimations; and
   control circuitry configured to:
      determine, based on one or more of the input values, a total welding operation energy of the welding operation;
      generate, based on one or more of the input values and the total welding operation energy, one or more welding operation estimations; and
      control the one or more indication devices to display one or more indications for the one or more welding operation estimations.

## Claims

1. A welding operation estimation system, comprising:
one or more input devices configured to receive one or more input values, wherein each of the input values is associated with an operation characteristic of a welding operation to be performed;
one or more indication devices configured to indicate one or more welding operation estimations; and
control circuitry configured to:
determine, based on one or more of the input values, a total welding operation energy of the welding operation;
generate, based on one or more of the input values and the total welding operation energy, one or more welding operation estimations; and
control the one or more indication devices to display one or more indications of the one or more welding operation estimations.

2. The welding operation system as defined in claim 1, further comprising communication circuitry, wherein the control circuitry is further configured to use the communication circuitry to transmit a control signal to a welding-type power system to control the welding-type power system to operate according to at least one of the welding operation estimations.

3. The welding operation estimation system as defined in claim 1, wherein:
the control circuitry is further configured to determine, based on one or more of the input values, one or more recommended values for welding parameters for the welding operation; and
the estimating of the one or more welding operation estimations is based on one or more of the recommended values for the welding parameters.

4. The welding operation estimation system as defined in claim 3, further comprising communication circuitry, wherein the control circuitry is further configured to use the communication circuitry to transmit a control signal to a welding-type power system to control the welding-type power system to operate according to the one or more recommended values for the welding parameters, and/or
wherein the determining of the total welding operation energy is based on the one or more recommended values for the welding parameters.

5. The welding operation estimation system as defined in any one of claims 1 to 4, wherein:
the control circuitry is further configured to determine, based on one or more of the input values, a consumable specification comprising a quantity of a consumable of the welding operation; and
the estimating of the one or more welding operation estimations is further based on the welding operation consumable quantity, and/or
wherein the control circuitry is configured to determine the total welding operation energy as a total number of watt-hours or a number of minutes of welding.

6. The welding operation estimation system as defined in any one of claims 1 to 5, wherein the control circuitry is further configured to determine, based on one or more of the input values, one or more recommended welding process characteristics for the welding operation, and optionally
wherein the control circuitry is configured to determine the total welding operation energy based on the one or more recommended welding process characteristics.

7. The welding operation estimation system as defined in any one of claims 1 to 6, wherein the operation characteristics comprise at least one physical characteristic of the welding operation, at least one consumable characteristic of one or more available consumables, and at least one energy characteristic of one or more available energy sources.

8. The welding operation estimation system as defined in any one of claims 1 to 7, wherein each of the one or more welding operation estimations comprises an energy supply strategy.

9. The welding operation estimation system as defined in claim 8, wherein at least one of the energy supply strategies is an energy storage device supply strategy comprising a quantity of energy storage devices having a specified capacity.

10. The welding operation estimation system as defined in claim 9, wherein the quantity of energy storage devices is generated based on a power source input of the one or more input values, the power source input comprising of an indication of an availability of AC input power and a type of the AC input power source, and optionally
wherein the type of the AC input power source comprises at least one of an AC input voltage, an AC input power source type, or an AC input current limit.

11. The welding operation estimation system as defined in any one of claims 8 to 10, wherein at least one of the energy supply strategies is a combined source energy supply strategy comprising an energy source combination of a quantity of energy storage devices and an AC input power source, and optionally
wherein the energy source combination is generated based on a power source input of the one or more input values, the power source input comprising an indication of an availability of the AC input power source and a type of the AC input power source.

12. The welding operation estimation system as defined in any one of claims 8 to 11, wherein at least one of the energy supply strategies comprises a plurality of energy source combinations of quantities of energy storage devices and AC input power sources.

13. The welding operation estimation system as defined in any one of claims 8 to 12, further comprising communication circuitry, wherein the control circuitry is further configured to use the communication circuitry to transmit a control signal to a welding-type power system to control the welding-type power system to operate according to at least one of the energy supply strategies.

14. The welding operation system as defined in anyone of claims 1 to 13, further comprising one or more feedback input devices configured to receive one or more feedback input values, wherein:
each of the feedback input values is associated with a completed welding operation characteristic of a completed welding operation; and
the control circuitry is further configured to:
compare the one or more feedback input values to a selected welding operation estimation of the one or more welding operation estimations;
determine, based on the comparing of the one or more feedback input values to the selected welding operation, one or more estimation process modifications; and
generate one or more subsequent welding operation estimations based on one or more subsequent input values, a subsequent welding operation energy, and one or more of the estimation process modifications.

15. A welding system, comprising:
power conversion circuitry configured to convert input power to welding-type power;
one or more input devices configured to receive one or more input values, wherein each of the input values is associated with an operation characteristic of a welding operation to be performed;
one or more indication devices configured to indicate one or more welding operation estimations; and
control circuitry configured to:
determine, based on one or more of the input values, a total welding operation energy of the welding operation;
generate, based on one or more of the input values and the total welding operation energy, one or more welding operation estimations; and
control the one or more indication devices to display one or more indications for the one or more welding operation estimations.
